# EUROPEAN PATENT APPLICATION

(11) **EP 4 826 844 A1**
(43) Date of publication of application: **21.10.2026**
(21) Application number: 25797617.5
(22) Date of filing: 27.04.2025
(51) Int. Cl.: H01M 10/613, H01M 10/625, H01M 10/6556

(54) **BATTERY DEVICE, REFRIGERANT HEAT-EXCHANGE DEVICE AND ELECTRIC DEVICE**

(30) Priority: 28.04.2024 CN 202420907842 U; 21.02.2025 WO PCT/CN2025/078593
(71) Applicant: Contemporary Amperex Technology Co., Limited, Ningde, Fujian 352100 (CN)
(72) Inventor: GAO, Bang, Ningde, Fujian 352100 (CN); ZHANG, Ruitong, Ningde, Fujian 352100 (CN); LI, Xingxing, Ningde, Fujian 352100 (CN)
(74) Representative: Kraus & Lederer PartGmbB
(86) International application number: PCT/CN2025/091605
(87) International publication number: WO 2025/228311

(57) **Abstract**

The present application belongs to the technical field of battery production. Provided are a battery apparatus, a refrigerant heat exchange apparatus and an electrical apparatus. The battery apparatus comprises a box body assembly, a battery cell assembly and a refrigerant heat-exchange component, wherein the box body assembly has an accommodating cavity; the battery cell assembly is arranged in the accommodating cavity; the battery cell assembly comprises a plurality of battery cell groups, each battery cell group comprising a plurality of battery cells stacked in a first direction, and the plurality of battery cell groups being arranged side by side in a second direction, the refrigerant heat-exchange component has a heat-exchange surface, the refrigerant heat-exchange component comprises a plurality of main heat-exchange flow channels, which are arranged in parallel in the second direction, each main heat-exchange flow channel comprises a main flow diversion node portion, a main flow confluence node portion and a main region flow channel portion; each main region flow channel portion comprises heat-exchange sub-flow channels connected in parallel; the projection region of each battery cell group on the heat-exchange surface covers at least one main heat-exchange flow channel; and the second direction is perpendicular to the first direction. The present application aims to improve the temperature equalization capability of the refrigerant heat-exchange component.

## Description

The present application claims priority to the Chinese Patent Application No. 202420907842.4, filed with the China National Intellectual Property Administration on April 28, 2024 and entitled "HEAT-EXCHANGE APPARATUS, BATTERY, AND ELECTRICAL APPARATUS", and the international application No. PCT/CN2025/078593, filed on February 21, 2025 and entitled "REFRIGERANT HEAT-EXCHANGE COMPONENT, BATTERY APPARATUS, AND ELECTRICAL APPARATUS", which are incorporated herein by reference in entirety.

### TECHNICAL FIELD

During the charging and discharging process, the battery apparatuses in new energy vehicles release a lot of heat. In the battery apparatus, a heat-exchange component that can exchange heat with a battery cell assembly is usually disposed, so as to cool the battery cell assembly through heat-exchange.

In related technologies, there is a significant mismatch between the flow channel distribution inside the heat-exchange component and the arrangement of the battery cell assembly, resulting in unbalanced heat-exchange between the heat-exchange component and the battery cell assembly, which in turn affects the operational performance and service life of the battery apparatus.

### SUMMARY OF THE INVENTION

Embodiments of the present application aim to provide a battery apparatus, a refrigerant heat-exchange apparatus, and an electrical apparatus, so as to solve the technical problem of unbalanced heat-exchange between a refrigerant heat-exchange component and a battery cell assembly in the battery apparatus.

### Technical solutions

The embodiments of the present application adopt the technical solution as follows:
In a first aspect, the present application provides a battery apparatus, including:
a box body assembly, being provided with an accommodating cavity;
a battery cell assembly, disposed in the accommodating cavity, where the battery cell assembly includes a plurality of battery cell groups, each battery cell group includes a plurality of battery cells stacked in a first direction, and the plurality of battery cell groups are disposed side by side in a second direction; and
a refrigerant heat-exchange component, being provided with a heat-exchange surface, the heat-exchange surface being configured to exchange heat with the battery cell assembly, where the refrigerant heat-exchange component includes a plurality of main heat-exchange flow channels, the plurality of main heat-exchange flow channels are arranged and connected in parallel in the second direction; each main heat-exchange flow channel includes a main flow diversion node portion, a main flow confluence node portion, and a main region flow channel portion, with the main region flow channel portion connected between the main flow diversion node portion and the main flow confluence node portion; each main region flow channel portion includes a plurality of heat-exchange sub-flow channels connected in parallel; a projection region of each battery cell group on the heat-exchange surface covers at least one main heat-exchange flow channel; and the second direction is perpendicular to the first direction.

In this embodiment, the battery cell assembly is arranged into the plurality of battery cell groups. Corresponding to each battery cell group, the plurality of main heat-exchange flow channels correspondingly distributed are formed in the refrigerant heat-exchange component, the plurality of main heat-exchange flow channels are connected in parallel in an arrangement direction of the battery cell groups, and an extension direction of each main heat-exchange flow channel is consistent with an arrangement direction of the plurality of battery cells in each battery cell group. This allows the plurality of battery cells in each battery cell group to have a larger heat-exchange area with the main heat-exchange flow channels, so that each main heat-exchange flow channel can exchange heat with each battery cell group in a more targeted mode, which facilitates improving the effect of balanced heat-exchange.

In one embodiment, all the heat-exchange sub-flow channels extend in the first direction and are disposed spaced apart from each other in the second direction.

In this embodiment, by arranging the main region flow channel portion into a structural form in which the plurality of heat-exchange sub-flow channels are disposed in parallel and spaced apart from each other, it helps to increase the number of flow channels and adjusts the width of the heat-exchange sub-flow channel to a suitable range, so as to increase a corresponding heat-exchange area between the main region flow channel portion and the battery cell assembly, and then improve the heat-exchange capacity and the circulating rate of a refrigerant, thereby improving the heat-exchange efficiency.

In one embodiment, in the first direction, both the main flow diversion node portion and the main flow confluence node portion are located at the same end of the main region flow channel portion.

In this embodiment, both the main flow diversion node portion and the main flow confluence node portion are located at the same end of the main region flow channel portion, so that other pipelines in communication with the main flow diversion node portion and the main flow confluence node portion can be concentrated on one side of the main heat-exchange flow channel for arrangement, which helps to improve the concentration degree of the arrangement of other flow channel sections.

In one embodiment, the refrigerant heat-exchange component includes a main flow diversion and flow confluence region and a heat-exchange region. The main heat-exchange flow channels are distributed in the heat-exchange region. The main flow diversion and flow confluence region includes a plurality of main flow channels. A part of the main flow channels are respectively in communication with the main flow diversion node portions, and the other part of the main flow channels are respectively in communication with the main flow confluence node portions. the number of the main flow channels is less than or equal to the total number of the flow diversion node portions and the flow confluence node portions.

In this embodiment, both the main flow diversion node portion and the main flow confluence node portion are located at the same end of the main region flow channel portion, so that other pipelines in communication with the main flow diversion node portion and the main flow confluence node portion can be concentrated on one side of the main heat-exchange flow channel for arrangement, which helps to improve the concentration degree of the arrangement of other flow channel sections.

In one embodiment, the plurality of main flow channels are divided into a plurality of first main flow channels and a plurality of second main flow channels. Each main region flow channel portion includes an upstream flow channel and a downstream flow channel. The first main flow channel, the main flow diversion node portion, the upstream flow channel, the downstream flow channel, the main flow confluence node portion, and the second main flow channel are disposed in communication with each other in sequence. the number of the first main flow channels is less than or equal to the total number of the flow diversion node portions.

In this embodiment, by controlling the number of the first main flow channels, the layout and structure of the first main flow channel in the main flow diversion and flow confluence region can be rationally planned, which helps to avoid the second main flow channel, so as to improve the space utilization rate, thereby achieving the goal of uniform flow diversion.

In one embodiment, the plurality of main flow channels are divided into a plurality of first main flow channels and a plurality of second main flow channels. Each main region flow channel portion includes an upstream flow channel and a downstream flow channel. The first main flow channel, the main flow diversion node portion, the upstream flow channel, the downstream flow channel, the main flow confluence node portion, and the second main flow channel are disposed in communication with each other in sequence. The number of the second main flow channels is less than or equal to the total number of the flow confluence node portions.

In this embodiment, by controlling the number of the second main flow channels, the layout and structure of the second main flow channel in the main flow diversion and flow confluence region can be rationally planned, which helps to avoid the first main flow channel, so as to improve the space utilization rate, thereby achieving the goal of uniform flow diversion.

In one embodiment, each main region flow channel portion includes an upstream flow channel and a downstream flow channel. The upstream flow channel includes a plurality of upstream sub-flow channels that are all in communication with the downstream flow channel. The plurality of upstream sub-flow channels extend in the first direction and are disposed opposite to and spaced apart from each other in the second direction. Each upstream sub-flow channel is in communication with the main flow diversion node portion. The downstream flow channel is connected the main flow confluence node portion.

In this embodiment, one first main flow channel is in communication with the plurality of upstream sub-flow channels, which helps to simplify the structural layout of the main flow diversion and flow confluence region, thereby saving space.

In one embodiment, each main region flow channel portion includes an upstream flow channel and a downstream flow channel. The downstream flow channel includes a plurality of downstream sub-flow channels that are all in communication with the upstream flow channel. The plurality of downstream sub-flow channels extend in the first direction and are disposed opposite to and spaced apart from each other in the second direction. Each downstream sub-flow channel is in communication with the main flow confluence node portion. The upstream flow channel is connected to the main flow diversion node portion.

In this embodiment, one second main flow channel is in communication with the plurality of downstream sub-flow channels, which helps to simplify the structural layout of the main flow diversion and flow confluence region, thereby saving space.

In one embodiment, each main region flow channel portion includes an upstream flow channel and a downstream flow channel. The upstream flow channel in a part of the main region flow channel portion is disposed adjacent to the upstream flow channel in an adjacent main region flow channel portion, and the downstream flow channel in a part of the main region flow channel portion is disposed adjacent to the downstream flow channel in an adjacent main region flow channel portion.

In this embodiment, arranging the plurality of upstream flow channels adjacent to each other or the plurality of downstream flow channels adjacent to each other can shorten the circulating path of the main flow channel, thereby reducing the heat loss and facilitating improving the heat-exchange capacity.

In one embodiment, the refrigerant heat-exchange component further includes an inlet and outlet region. The inlet and outlet region includes a first flow-direction flow channel and a second flow-direction flow channel. A flow direction of the refrigerant in the first flow-direction flow channel is opposite to a flow direction of the refrigerant in the second flow-direction flow channel. The plurality of main heat-exchange flow channels are symmetrically arranged on both sides of an axis of symmetry parallel to the first direction, and the inlet and outlet region is arranged at one end of the axis of symmetry. Both the first flow-direction flow channel and the second flow-direction flow channel are in communication with the main flow channel.

In this embodiment, the inlet and outlet region is arranged at one end of the axis of symmetry, which helps to achieve uniform and symmetrical distribution of the refrigerant after the refrigerant enters the refrigerant flow channel component.

In one embodiment, the number of the battery cell groups is equal to the number of the main heat-exchange flow channels.

In this embodiment, the number of the battery cell groups is equal to the number of the main heat-exchange flow channels, which can achieve balanced and stable heat-exchange for each battery cell group in a targeted mode.

In one embodiment, the battery cell group has a first length in the first direction, and each heat-exchange flow channel correspondingly forms the heat-exchange surface on a surface of the refrigerant heat-exchange component. The heat-exchange surface has a second length in the first direction, and a ratio of the first length to the second length is in a range of 0.8 to 1.2.

In this embodiment, by controlling relative lengths of the battery cell group and the heat-exchange surface in the first direction, the battery cells can be rationally arranged to facilitate reducing energy waste, thereby improving the heat-exchange efficiency.

In one embodiment, the refrigerant heat-exchange component is provided with the heat-exchange surface opposite to the battery cell assembly, each main heat-exchange flow channel is configured to be opposite to the heat-exchange surface, and a ratio of an area of a projection region of each main heat-exchange flow channel on the heat-exchange surface to an area of the heat-exchange surface is greater than or equal to 0.4 and less than or equal to 0.8.

In this embodiment, by reasonably controlling the ratio of the area of the projection region of the main heat-exchange flow channel on the heat-exchange surface, it is possible to ensure that there is a sufficient heat-exchange area between the refrigerant and the battery cell, which reduces the risk of the main heat-exchange flow channels being too dense or too sparse, helps to optimize the heat-exchange effect, and also facilitates the design and manufacturing of the main heat-exchange flow channel at the same time.

In one embodiment, the refrigerant heat-exchange component is provided with a first surface and a second surface opposite to each other, the first surface being disposed opposite to the battery cell assembly; and the refrigerant heat-exchange component includes a plurality of mounting holes, the plurality of mounting holes being configured in a penetrating mode between the first surface and the second surface and disposed to avoid the main heat-exchange flow channel.

In this embodiment, by providing the mounting holes, it is easy to connect and fix the refrigerant heat-exchange component to other components through bolts or other locking devices, thereby improving the convenience of connecting the refrigerant heat-exchange component to other components.

In one embodiment, in the first direction, the plurality of mounting holes are arranged in a middle region of the refrigerant heat-exchange component and disposed spaced apart from each other in the second direction; and/or, in the second direction, the plurality of mounting holes are arranged in the middle region of the refrigerant heat-exchange component and disposed spaced apart from each other in the first direction.

In this embodiment, the plurality of mounting holes are arranged in the middle of the refrigerant heat-exchange component and can be evenly spaced in the second direction, which thus helps to improve the balance of the force on the refrigerant heat-exchange component and helps to make the layout between the main heat-exchange flow channel and the mounting hole more regular.

In one embodiment, the spacing between every two adjacent mounting holes ranges from 300 mm to 1000 mm; and/or
an outer diameter of the mounting hole is 30 mm to 60 mm.

In this embodiment, considering that the arrangement of the mounting hole may affect the strength and rigidity of the refrigerant heat-exchange component itself and the connection stability, the spacing between the mounting holes is controlled between 300 mm and 1000 mm, and the outer diameter of the mounting holes is controlled between 30 mm and 60 mm. This allows for a further balance between the rigidity and strength of the refrigerant heat-exchange component and the connection stability.

In one embodiment, a plurality of cavities are also formed in the refrigerant heat-exchange component, and each cavity is configured to avoid the main heat-exchange flow channel.

In this embodiment, by disposing the plurality of cavities, the functions of flow guiding and air venting can be achieved during the welding process, which helps to improve the welding quality and welding tightness, and helps to improve the overall structural strength of the refrigerant heat-exchange component.

In a second aspect, the present application provides a refrigerant heat-exchange apparatus, where the refrigerant heat-exchange apparatus includes a refrigerant heat-exchange component in the battery apparatus according to any one of the above.

In a third aspect, the present application provides an electrical apparatus, including the battery apparatus according to any one of the above, where the battery apparatus is configured to store or provide electrical energy.

The above illustrations are merely brief descriptions for the technical solutions of the present application. Specific implementation manners of the present application are described specifically in the following to understand the technical solutions of the present application more clearly and implement the present application according to content of the specification, and to make the above and other objectives, features and advantages of the present application more comprehensible.

### BRIEF DESCRIPTION OF THE DRAWINGS

In order to more clearly illustrate the technical solution of the embodiments of the present application, the accompanying drawings that need to be used in the embodiments of the present application or in the prior art will be briefly introduced below, and it is obvious that the accompanying drawings described below are only some embodiments of the present application, and for those of ordinary skill in the art, other accompanying drawings can also be obtained according to the accompanying drawings without any creative labor.
FIG. 1 is a schematic structural diagram of a vehicle according to some embodiments of the present application;
FIG. 2 is a first exploded schematic structural diagram of a battery apparatus according to some embodiments of the present application;
FIG. 3 is a second exploded schematic structural diagram of the battery apparatus according to some embodiments of the present application;
FIG. 4 is an exploded schematic structural diagram of a refrigerant heat-exchange component in the battery apparatus according to some embodiments of the present application;
FIG. 5 is a schematic structural diagram of an interior of the refrigerant heat-exchange component in the battery apparatus according to some embodiments of the present application;
FIG. 6 is a schematic structural diagram of arrangement of main heat-exchange flow channels in a heat-exchange region in the refrigerant heat-exchange component according to some embodiments of the present application;
FIG. 7 is a schematic diagram of a relative positional relationship between internal flow channels of the refrigerant heat-exchange component and a battery cell assembly in the battery apparatus according to some embodiments of the present application;
FIG. 8 is a schematic diagram of a relative positional relationship between the refrigerant heat-exchange component and the battery cell assembly in the battery apparatus according to some embodiments of the present application;
FIG. 9 is a first schematic structural diagram of one main heat-exchange flow channel in the refrigerant heat-exchange component in the battery apparatus according to some embodiments of the present application;
FIG. 10 is a second schematic structural diagram of one main heat-exchange flow channel in the refrigerant heat-exchange component in the battery apparatus according to some embodiments of the present application;
FIG. 11 is a schematic structural diagram of flow channel distribution in a main flow diversion and flow confluence region in the refrigerant heat-exchange component in the battery apparatus according to some embodiments of the present application;
FIG. 12 is a schematic structural diagram of flow channel distribution in an inlet and outlet region in the refrigerant heat-exchange component in the battery apparatus according to some embodiments of the present application;
FIG. 13 is a schematic diagram of a projection area of the main heat-exchange flow channel and an area of a heat-exchange surface in the refrigerant heat-exchange component in the battery apparatus according to some embodiments of the present application;
FIG. 14 is a first schematic diagram of distribution of mounting holes in the refrigerant heat-exchange component in the battery apparatus according to some embodiments of the present application;
FIG. 15 is a second schematic diagram of distribution of the mounting holes in the refrigerant heat-exchange component in the battery apparatus according to some embodiments of the present application;
FIG. 16 is a third schematic diagram of distribution of the mounting holes in the refrigerant heat-exchange component in the battery apparatus according to some embodiments of the present application; and
FIG. 17 is a partially enlarged schematic diagram of part A in FIG. 5.

### Description of reference numerals:

1000. Vehicle; 1100. Battery apparatus; 1110. Battery cell assembly; 1111. Battery cell group; 1112. Battery cell; 1120. Box body assembly; 1121. Box body; 1122. Cover body; 1123. Box frame; 1124. Accommodating cavity; 1125. Box bottom plate; 1130. Refrigerant heat-exchange component; 1131. Inlet and outlet region; 11311. First flow-direction flow channel; 11312. Second flow-direction flow channel; 1132. Main flow diversion and flow confluence region; 11321. Main flow channel; 11322. First main flow channel; 11323. Second main flow channel; 1133. Heat-exchange region; 11331. Main heat-exchange flow channel; 11332 Main flow diversion node portion; 11333. Main region flow channel portion; 11334: Main flow confluence node portion; 11335 Heat-exchange sub-flow channel; 11336. Upstream flow channel; 11337. Downstream flow channel; 11338. Upstream sub-flow channel; 11339 Downstream sub-flow channel; 1134. Heat-exchange surface; 1135. First surface; 1136. First sub-component; 1137. Second sub-component; 1138. Cavity; 1139. Mounting hole; 1140 Connector component; 1200. Controller; 1300. Motor; X. First direction; Y. Second direction; L1. First length; L2. Second length.

### DETAILED DESCRIPTION

The embodiments of the technical solutions of the present application will be described in detail below with reference to the accompanying drawings. The following embodiments are only used to illustrate the technical solutions of the present application more clearly, and thus are only interpreted as embodiments, rather than used to limit the scope of protection of the present application.

Unless otherwise defined, all technical and scientific terms used herein have the same meanings as those commonly understood by those skilled in the art of the present application. The terms used herein are intended only for the purpose of describing specific embodiments and are not intended to limit the present application. The terms "including" and "having" and any variations thereof in the specification and claims of the present application and in the description of the above accompanying drawings are intended to cover non-exclusive inclusion.

In the description of the embodiments of the present application, the technical terms "first", "second", etc., are only used for distinguishing different objects, and cannot be understood as indicating or implying relative importance or implying the number, specific order or primary and secondary relationship of the technical features indicated. In the description of the embodiments of the present application, the meaning of "a plurality of" is two or more, unless otherwise explicitly and specifically defined.

The "embodiment" mentioned herein means that specific features, structures, or characteristics described with reference to the embodiment may be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiment of the present application, the term "and/or" is merely an association relationship that describes the associated object, indicating that there can be three kinds of relationships, such as A and/or B, which can be denoted as: the existence of A alone, the existence of A and B at the same time, and the existence of B alone. Moreover, the character "/" herein generally indicates that the context objects are in an "or" relationship.

In the description of the embodiments of the present application, the term "a plurality of" refers to more than two (including two), and similarly, "a plurality of groups" refers to more than two groups (including two groups); and "a plurality of sheets" refers to more than two sheets (including two sheets).

In the description of the embodiments of the present application, the orientation or positional relationships indicated by the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. are based on the orientation or positional relationships shown in the accompanying drawings, and are only for convenience of description of the present application and simplification of the description, rather than indicating or implying that the indicated apparatus or element must have a specific orientation, be constructed and operate in a specific orientation, and therefore, cannot be understood as a limitation to the present application.

In the description of the embodiments of the present application, unless otherwise expressly specified and limited, the technical terms "mount," "connect," "connection," "fix", etc. should be understood in a broad sense, such as, a fixed connection, a detachable connection, or an integral connection; a mechanical connection, or an electrical connection; directly connect, indirectly connect through an intermediate medium, an internal communication of two elements, or interaction between two elements. For those of ordinary skill in the art, the specific meanings of the above terms in the embodiments of the present application can be understood according to specific situations.

In recent years, new energy vehicles have experienced rapid development, and their market share is increasing. The urgent problem to be solved in the new energy vehicle industry is to quickly and efficiently achieve energy replenishment.

During the charging and discharging process, the battery apparatuses in new energy vehicles release a lot of heat. In the battery apparatus, a refrigerant heat-exchange component that can exchange heat with a battery cell assembly is usually disposed, so as to cool the battery cell assembly through heat-exchange.

Fast charging is a mainstream solution for new energy vehicles to quickly replenish their energy. However, it faces many challenges in its implementation. Electrode assemblies generate a lot of heat during fast charging, which can easily cause the internal temperature of the battery apparatus to rise sharply. During fast charging, unbalanced heat-exchange between the refrigerant heat-exchange component and the battery cell assembly is more likely to occur, causing the temperature of a part of the battery cell assembly to rise sharply and a large amount of heat to accumulate inside the battery apparatus. This affects the operational performance and service life of the battery apparatus and may even lead to significant hidden dangers to the battery apparatus during use. Therefore, ensuring balanced heat dissipation and rapid heat-exchange of the battery apparatus and improving the consistency of temperature distribution in the battery apparatus have become bottlenecks in battery thermal management.

Specifically, the battery apparatus generates heat during charging and discharging. If the heat cannot be effectively dissipated, it may lead to a decrease in the performance of the battery apparatus and a shortened service life. A high temperature can accelerate chemical reactions in the battery apparatus, increase the internal resistance of the battery apparatus, and reduce the energy density, and in severe cases, may cause thermal runaway. Therefore, the refrigerant heat-exchange component is disposed in the battery apparatus to cool the battery cell assembly.

Regarding the issue of uneven temperature distribution and localized high temperatures within the battery apparatus, research has revealed that for the refrigerant heat-exchange component employing a refrigerant for heat-exchange, numerous flow channels are formed in a chaotic manner in the refrigerant heat-exchange component. Flow channels with heat-exchange capacity and flow channels with lower heat-exchange capacity are interspersed with each other irregularly. This leads to an unpredictable temperature distribution on the refrigerant heat-exchange component. Consequently, when the above flow channel is paired with the battery cell assembly, they cannot be matched according to the arrangement characteristic of all the battery cells in the battery cell assembly, hindering the targeted balanced heat-exchange of the battery cell assembly.

Therefore, the present application provides a battery apparatus, where a plurality of main heat-exchange flow channels which are arranged in parallel in a second direction are formed in a refrigerant heat-exchange component therein, and battery cell assemblies are correspondingly distributed in the second direction to form a plurality of battery cell groups; each battery cell group can cover at least one main heat-exchange flow channel, so that the battery cell assembly and the main heat-exchange flow channel are matched to be disposed, so that each battery cell group can exchange heat through at least one main heat-exchange flow channel, thereby ensuring the heat-exchange area of the main heat-exchange flow channel for each battery cell group, and then improving the effect of the refrigerant heat-exchange component on the balanced heat-exchange of the battery cell assembly.

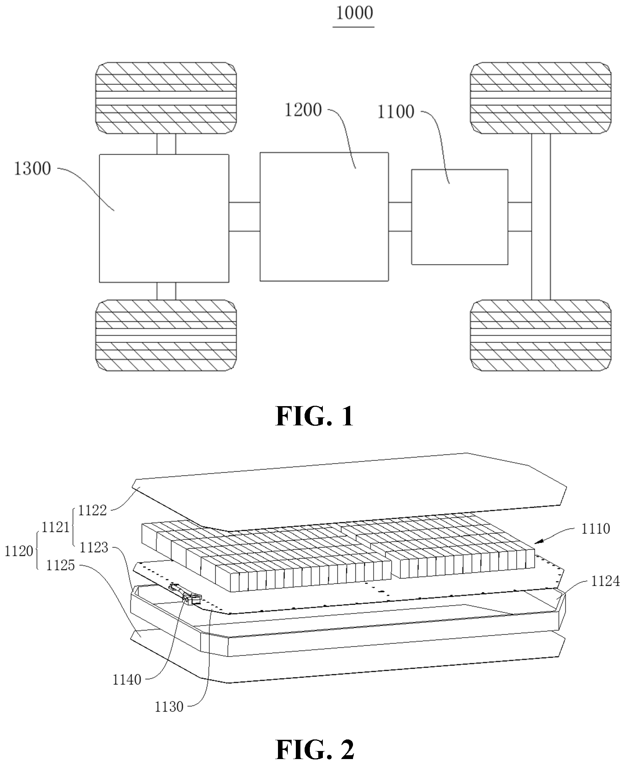

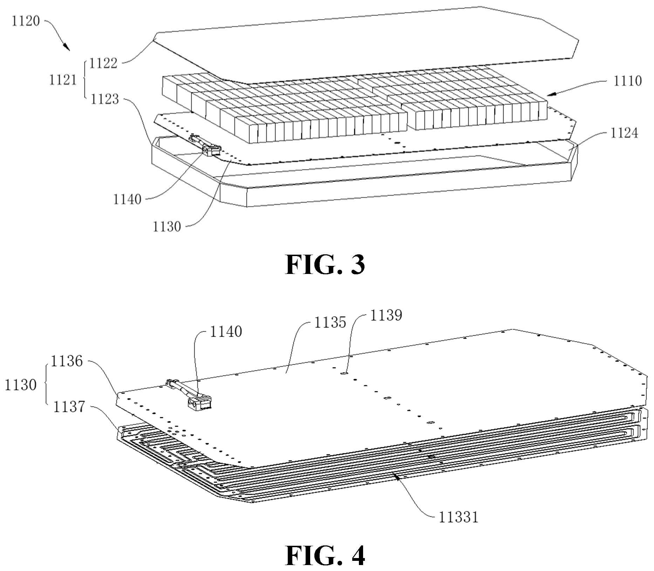

Specifically, referring to FIG. 2 and FIG. 3, embodiments of the present application provide a battery apparatus. The battery apparatus 1100 may include one or more battery cell assemblies 1110 for providing voltage and capacity. The battery cell assembly may include a plurality of battery cells 1112, which are connected in series, parallel or series-parallel through busbar components. The battery apparatus 1100 may be a battery pack. The battery pack generally includes a box body assembly 1120 and one or more battery cell assemblies 1110. The battery cell assemblies 1110 are accommodated in the box body assembly.

The battery apparatus 1100 disclosed in the embodiment of the present application may be used in an electrical apparatus in which the battery apparatus 1100 is used as a power source or in various energy storage apparatuses and energy storage systems in which the battery apparatus 1100 is used as an energy storage element. The electrical apparatus may be, but is not limited to, a mobile phone, a portable set, a laptop, an electric toy, an electric tool, a storage battery car, a vehicle, a ship, a spacecraft, and the like. The electric toy may include a fixed or mobile electric toy, such as a game machine, an electric vehicle toy, an electric ship toy, an electric airplane toy, and the like. The spacecraft may include an airplane, a rocket, a space shuttle, a spaceship, and the like.

For the convenience of description in the following embodiments, an electrical apparatus being a vehicle 1000 according to an embodiment of the present application is taken as an example for the description.

Referring to FIG. 1, FIG. 1 is a schematic structural diagram of a vehicle 1000 according to some embodiments of the present application. The vehicle 1000 may be a fuel vehicle, a gas vehicle, or a new energy vehicle. The new energy vehicle may be an all-electric vehicle, a hybrid vehicle, an extended-range electric vehicle, or the like. A battery apparatus 1100 is arranged in the vehicle 1000. The battery apparatus 1100 may be arranged at the bottom, head, or tail of the vehicle 1000. The battery apparatus 1100 may be configured to supply power to the vehicle 1000. For example, the battery apparatus 1100 may be used as an operating power source of the vehicle 1000. The vehicle 1000 may further include a controller 1200 and a motor 1300. The controller 1200 is configured to control the battery apparatus 1100 to supply power to the motor 1300, for example, for the operating power demand when the vehicle 1000 is starting, navigating, and driving.

In some embodiments of the present application, the battery apparatus 1100 may not only be used as an operating power source for the vehicle 1000, but also as a driving power source for the vehicle 1000, to replace or partially replace fuel or natural gas to provide driving power for the vehicle 1000.

Referring to FIG. 2 and FIG. 3, FIG. 2 and FIG. 3 are an exploded diagram of the battery apparatus 1100 according to some embodiments of the present application. In one embodiment, the battery apparatus 1100 includes a box body assembly 1120 and a battery cell assembly 1110. An accommodating cavity 1124 is formed in the box body assembly 1120, and the battery cell assembly 1110 is housed in the accommodating cavity 1124. The battery cell assembly 1110 is usually formed by arranging a plurality of battery cells 1112. Alternatively, the battery cell assembly 1110 can also be a battery module, which is formed by arranging and fixing a plurality of battery cells 1112 to form an independent module, and the independent module is one battery cell group 1111. Here, the box body assembly 1120 is configured to provide the accommodating cavity 1124 for the battery cell assembly 1110, and the box body assembly 1120 may be of various structures.

The battery cell 1112 refers to a minimum unit forming the battery apparatus 1100. Each battery cell 1112 may be a secondary battery cell or a primary battery cell, or may be a lithium-sulfur battery cell, a sodium-ion battery cell or a magnesium-ion battery cell, but is not limited thereto. The battery cell 1112 may be in a cylinder shape, a flat body shape, a cuboid shape or other shapes.

According to some embodiments of the present application, referring to FIG. 2 to FIG. 7, embodiments of the present application provide a battery apparatus 1100. The battery apparatus 1100 includes a box body assembly 1120, a battery cell assembly 1110, and a refrigerant heat-exchange component 1130. The box body assembly 1120 is provided with an accommodating cavity 1124. The battery cell assembly 1110 is disposed in the accommodating cavity 1124. The battery cell assembly 1110 includes a plurality of battery cell groups 1111, each battery cell group 1111 includes a plurality of battery cells 1112 stacked in a first direction X, and the plurality of battery cell groups 1111 are disposed side by side in a second direction Y. The refrigerant heat-exchange component 1130 is provided with a heat-exchange surface 1134, and the heat-exchange surface 1134 is configured to exchange heat with the battery cell assembly 1110. The refrigerant heat-exchange component 1130 includes a plurality of main heat-exchange flow channels 11331, and the plurality of main heat-exchange flow channels 11331 are arranged and connected in parallel in the second direction Y; each main heat-exchange flow channel 11331 includes a main flow diversion node portion 11332, a main flow confluence node portion 11334, and a main region flow channel portion 11333, with the main region flow channel portion 11333 connected between the main flow diversion node portion 11332 and the main flow confluence node portion 11334; each main region flow channel portion 11333 includes a plurality of heat-exchange sub-flow channels 11335 connected in parallel; a projection region of each battery cell group 1111 on the heat-exchange surface 1134 covers at least one main heat-exchange flow channel 11331; and the second direction Y is perpendicular to the first direction X.

Since the refrigerant heat-exchange component 1130 needs to exchange heat with the battery cell assembly 1110, the refrigerant heat-exchange component 1130 needs to be disposed close to the battery cell assembly 1110, or the refrigerant heat-exchange component 1130 needs to directly make contact with or abut against the battery cell assembly 1110, thereby improving the heat-exchange effect. When heat-exchange is performed between the refrigerant heat-exchange component 1130 and the battery cell assembly 1110, a large heat-exchange area needs to be formed between the refrigerant heat-exchange component 1130 and the battery cell 1112 to improve the heat-exchange effect. Therefore, the heat-exchange surface 1134 that is close to or in contact with a surface of the battery cell 1112 may be formed on the refrigerant heat-exchange component 1130.

The surface of the battery cell 1112 that is close to or in contact with the heat-exchange surface 1134 can be a bottom surface of the battery cell 1112 or a side surface of the battery cell 1112. Taking the battery apparatus 1100 being horizontally placed as an example, a surface on a lower portion of the battery cell 1112 is the bottom surface, and a surface of the battery cell 1112 in a vertical direction is the side surface. In this embodiment, the heat-exchange surface 1134 of the refrigerant heat-exchange component 1130 may be in contact with or disposed close to the bottom surface or the side surface of the battery cell 1112. That is to say, the refrigerant heat-exchange component 1130 may be located at a bottom of the battery cell assembly 1110 or at a side of the battery cell assembly 1110. The refrigerant heat-exchange component 1130 located at the bottom of the battery cell assembly 1110 may also be generally called a heat-exchange bottom plate or a cooling bottom plate.

For the convenience of description in the following embodiments, a battery apparatus 1100 according to an embodiment of the present application is taken as an example, which is placed horizontally with the refrigerant heat-exchange component 1130 located at the bottom of the battery cell assembly 1110.

For the battery cell assembly 1110, the battery cell assembly 1110 includes a plurality of columns or a plurality of battery cell groups 1111. The plurality of battery cell groups 1111 are disposed side by side in the second direction Y. Each battery cell group 1111 includes a plurality of battery cells 1112. The battery cells 1112 can be cubic or cylindrical. The battery cells 1112 in each battery cell group 1111 are all stacked and arranged sequentially in the first direction X. The second direction Y is a direction perpendicular to the first direction X.

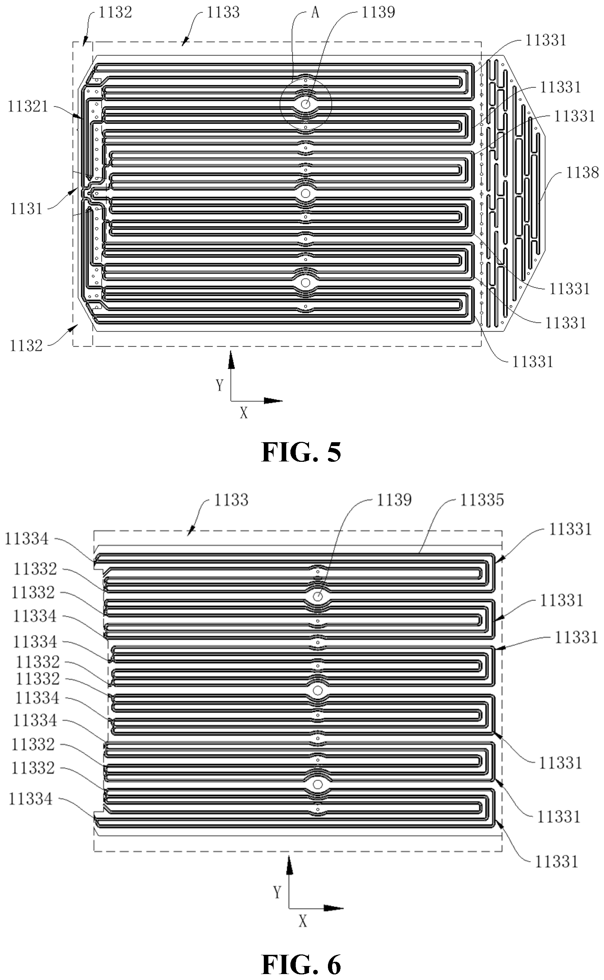

Referring to FIG. 5 and FIG. 6 for the main heat-exchange flow channel 11331 in the refrigerant heat-exchange component 1130, the main heat-exchange flow channel 11331 can be a hole structure in the refrigerant heat-exchange component 1130. For example, the refrigerant heat-exchange component 1130 is plate-shaped, and a through hole structure or cavity structure with a certain extension length and extension path is formed in a plate of the refrigerant heat-exchange component 1130. The through hole structure or cavity structure then forms the main heat-exchange flow channel 11331. The refrigerant heat-exchange component 1130 can be of an integrally molded structure, and the main heat-exchange flow channel 11331 can be manufactured by gas-assisted or water-assisted molding; or, the refrigerant heat-exchange component 1130 can also be formed by assembled molding. For example, the refrigerant heat-exchange component 1130 includes a first sub-component 1136 and a second sub-component 1137. A groove structure with a preset extension length and extension shape is formed on the second sub-component 1137. The groove structure can be manufactured by stamping. The first sub-component 1136 and the second sub-component 1137 are fixedly or detachably connected, and a groove opening of the groove structure is closed to form the through hole structure or cavity structure, that is to say, the main heat-exchange flow channel 11331 is formed. The main heat-exchange flow channel 11331 should be disposed close to the heat-exchange surface 1134. The extension path of the main heat-exchange flow channel 11331 may be parallel to the heat-exchange surface 1134 to increase the heat-exchange effect. The battery cell assembly 1110 is disposed opposite to the heat-exchange surface 1134.

For example, the first sub-component 1136 may be an upper plate, the second sub-component 1137 may be a lower plate, and the main heat-exchange flow channel 11331 is formed on the lower plate by stamping. The first sub-component 1136 and the second sub-component 1137 can be welded together by brazing, and a welded region may play a role in heat transfer.

The first direction X and the second direction Y are both parallel to the heat-exchange surface 1134. The first direction X and the second direction Y are two perpendicular directions. The plurality of main heat-exchange flow channels 11331 are disposed. The extension direction of each main heat-exchange flow channel 11331 is the first direction X. It can be understood that each main heat-exchange flow channel 11331 internally includes a plurality of flow channel structures. The plurality of flow channel structures are in communication with each other and all extend in the first direction X. The plurality of main heat-exchange flow channels 11331 are arranged at intervals and are in communication with each other in the second direction Y to form a parallel flow channel structure. It can be seen that the plurality of main heat-exchange flow channels 11331 and the plurality of battery cell groups 1111 are correspondingly arranged in sequence in the second direction Y. The plurality of battery cells 1112 in each battery cell group 1111 are arranged in sequence in the extension direction of the main heat-exchange flow channel 11331.

Since the battery cell assembly 1110 is disposed opposite to the heat-exchange surface 1134, it can be known that each battery cell group 1111 forms a projection region on the heat-exchange surface 1134, so that the projection region of each battery cell group 1111 on the heat-exchange surface 1134 covers at least one main heat-exchange flow channel 11331.

One possible scenario is that the projection region of each battery cell group 1111 on the heat-exchange surface 1134 covers one main heat-exchange flow channel 11331. That is, one main heat-exchange flow channel 11331 performs targeted heat-exchange for one column of battery cell groups 1111. Each battery cell group 1111 may exchange heat through one main heat-exchange flow channel 11331. As long as the structures of all the main heat-exchange flow channels 11331 are the same, and the flow rates, pressures, and other data of the refrigerant in all the main heat-exchange flow channel 11331 are the same. Then it can be known that all the main heat-exchange flow channels 11331 have the same heat-exchange capacity. Therefore, balanced heat-exchange for each battery cell group 1111 can be achieved.

Other possible scenarios are that the projection region of each battery cell group 1111 on the heat-exchange surface 1134 may cover one main heat-exchange flow channel 11331 and also cover a part of an adjacent main heat-exchange flow channel 11331. Alternatively, the projection region of each battery cell group 1111 on the heat-exchange surface 1134 may cover a plurality of main heat-exchange flow channels 11331, thereby enhancing the heat-exchange capacity of the main heat-exchange flow channel 11331 for each battery cell group 1111. To improve the effect of balanced heat-exchange, the number of the main heat-exchange flow channels 11331 corresponding to each battery cell group 1111 can be the same, where the number can be a fraction or a decimal. For example, the projection region of each battery cell group 1111 on the heat-exchange surface 1134 covers one main heat-exchange flow channel 11331 and half of the adjacent main heat-exchange flow channel 11331.

In this embodiment, the battery cell assembly 1110 is arranged into the plurality of battery cell groups 1111. Corresponding to each battery cell group 1111, the plurality of main heat-exchange flow channels 11331 correspondingly distributed are formed in the refrigerant heat-exchange component 1130, the plurality of main heat-exchange flow channels 11331 are connected in parallel in an arrangement direction of the battery cell groups 1111, and an extension direction of each main heat-exchange flow channel 11331 is consistent with an arrangement direction of the plurality of battery cells 1112 in each battery cell group 1111. This allows the plurality of battery cells 1112 in each battery cell group 1111 to have a larger heat-exchange area with the main heat-exchange flow channel 11331, and each main heat-exchange flow channel 11331 can exchange heat with each battery cell group 1111 in a more targeted mode, which facilitates improving the effect of balanced heat-exchange.

In some embodiments, referring to FIG. 5, FIG. 6, and FIG. 9, each main heat-exchange flow channel 11331 includes a main flow diversion node portion 11332, a main flow confluence node portion 11334, and a main region flow channel portion 11333, with the main region flow channel portion 11333 connected between the main flow diversion node portion 11332 and the main flow confluence node portion 11334; and the projection region of each battery cell group 1111 on the refrigerant heat-exchange component 1130 covers at least one main heat-exchange flow channel 11331, or at least one main region flow channel portion 11333.

Specifically, since the refrigerant circulates in the main heat-exchange flow channel 11331 in the extension direction of the main heat-exchange flow channel 11331, it can be known that the main heat-exchange flow channel 11331 forms an inlet and an outlet at both ends of the extension direction respectively, and a main circulating region is formed between the inlet and the outlet. It can be understood that each main heat-exchange flow channel 11331 includes the main flow diversion node portion 11332, the main flow confluence node portion 11334, and the main region flow channel portion 11333. The main flow diversion node portion 11332 can be considered as the inlet part of the main heat-exchange flow channel 11331, the main flow confluence node portion 11334 can be considered as the outlet part of the main heat-exchange flow channel 11331, and the main region flow channel portion 11333 can be considered as the circulating part between the inlet and the outlet. The projection region of each battery cell group 1111 on the refrigerant heat-exchange component 1130 covers at least one main heat-exchange flow channel 11331. Specifically, this includes cases where the projection region of each battery cell group 1111 on the refrigerant heat-exchange component 1130 covers one main heat-exchange flow channel 11331; or, the projection region of each battery cell group 1111 on the refrigerant heat-exchange component 1130 covers one main heat-exchange flow channel 11331, and can also cover a part of an adjacent main heat-exchange flow channel 11331; or, the projection region of each battery cell group 1111 on the heat-exchange surface 1134 can cover a plurality of main heat-exchange flow channels 11331, thereby enhancing the heat-exchange capacity of the main heat-exchange flow channels 11331 for each battery cell group 1111.

Optionally, the above main flow diversion node portion 11332 and the above main flow confluence node portion 11334 can be considered as a position where a plurality of branch flow channels converge or intersect. Therefore, the resistance, flow rate, pressure drop in the flow channel, and the like of the refrigerant may generally be affected. As a result, the heat-exchange capacity of the main flow diversion node portion 11332 and the main flow confluence node portion 11334 is prone to instability. Therefore, the battery cell group 1111 can be arranged to avoid the main flow diversion node portion 11332 and the main flow confluence node portion 11334, so that the battery cell group 1111 is concentrated in a region corresponding to the main region flow channel portion 11333.

Similarly, it is necessary to ensure that the projection region of each battery cell group 1111 on the refrigerant heat-exchange component 1130 covers at least one main region flow channel portion 11333. For example, the projection region of each battery cell group 1111 on the heat-exchange surface 1134 covers one main region flow channel portion 11333. That is, one main region flow channel portion 11333 performs targeted heat-exchange on one column of battery cell groups 1111. Each battery cell group 1111 may exchange heat through one main region flow channel portion 11333. As long as the structures of all the main heat-exchange flow channels 11331 are the same and the flow rate, pressure, and other data of the refrigerant in each main region flow channel portion 11333 are the same, it can be known that all the main region flow channel portions 11333 have the same heat-exchange capacity. Therefore, balanced heat-exchange on each battery cell group 1111 can be achieved.

For another example, the projection region of each battery cell group 1111 on the heat-exchange surface 1134 covers one main region flow channel portion 11333, and also covers a part of an adjacent main region flow channel portion 11333; alternatively, the projection region of each battery cell group 1111 on the heat-exchange surface 1134 can cover a plurality of main region flow channel portions 11333, thereby enhancing the heat-exchange capacity of the main region flow channel portion 11333 for each battery cell group 1111. To improve the effect of balanced heat-exchange, the number of the main region flow channel portions 11333 corresponding to each battery cell group 1111 can be the same, where the number can be a fraction or a decimal. For example, the projection region of each battery cell group 1111 on the heat-exchange surface 1134 covers one main region flow channel portion 11333 and half of an adjacent main region flow channel portion 11333.

In this embodiment, the battery cell assembly 1110 is matched and correspondingly disposed with the main region flow channel portion 11333, which has a strong temperature equalization capability, in the main heat-exchange flow channel 11331 in a concentrated mode, thereby further improving the capability to perform balanced heat-exchange on the battery cell assembly 1110.

In some embodiments, referring to FIG. 6, each main region flow channel portion 11333 includes a plurality of heat-exchange sub-flow channels 11335 connected in parallel.

Specifically, the heat-exchange sub-flow channel 11335 may be understood as a straight flow channel structure. All the heat-exchanger sub-flow channels 11335 are arranged in parallel and in communication with each other, so that the refrigerant can flow back and forth in each heat-exchange sub-flow channel 11335.

In this embodiment, by arranging the main region flow channel portion 11333 into a structural form in which the plurality of heat-exchange sub-flow channels 11335 are arranged in parallel and spaced apart from each other, it helps to increase the number of flow channels and adjusts the width of the heat-exchange sub-flow channel 11335 to a suitable range, so as to increase a corresponding heat-exchange area between the main region flow channel portion 11333 and the battery cell assembly 1110, and then improve the heat-exchange capacity and the circulating rate of the refrigerant, thereby improving the heat-exchange efficiency.

In some embodiments, referring to FIG. 6, all the heat-exchange sub-flow channels 11335 extend in the first direction X and are disposed spaced apart from each other in the second direction Y.

Specifically, all the heat-exchange sub-flow channels 11335 extend in the first direction X, so that each battery cell group 1111 can cover the length direction of the heat-exchange sub-flow channel 11335, which helps to increase the area of each battery cell group 1111 corresponding to the main region flow channel portion 11333, which helps to increase the heat-exchange area. The plurality of heat-exchange sub-flow channels 11335 are disposed spaced apart from each other in the second direction Y, so that the main region flow channel portion 11333 is divided into a plurality of small-width fine flow channels in the second direction Y (or the width direction of the refrigerant heat-exchange component 1130). Compared with a wider flow channel, this can increase the circulating rate of the refrigerant, which helps to improve the heat-exchange efficiency. In addition, by adjusting the spacing between every two adjacent heat-exchange sub-flow channels 11335 and controlling the width of each heat-exchange sub-flow channel 11335, a larger number of heat-exchange sub-flow channels 11335 can correspond to each battery cell 1112, thereby increasing the arrangement density of the heat-exchange sub-flow channels 11335 in the main region flow channel portion 11333.

In this embodiment, by arranging the main region flow channel portion 11333 into a structural form in which the plurality of heat-exchange sub-flow channels 11335 are arranged in parallel and spaced apart from each other, it helps to increase the number of flow channels and adjusts the width of the heat-exchange sub-flow channel 11335 to a suitable range, so as to increase a corresponding heat-exchange area between the main region flow channel portion 11333 and the battery cell assembly 1110, and then improve the heat-exchange capacity and the circulating rate of the refrigerant, thereby improving the heat-exchange efficiency.

In some embodiments, referring to FIG. 5 and FIG. 6, in the first direction X, both the main flow diversion node portion 11332 and the main flow confluence node portion 11334 are located at the same end of the main region flow channel portion 11333.

Specifically, since the main heat-exchange flow channel 11331 extends in the first direction X, it can be known that the main heat-exchange flow channel 11331 is provided with two ends in the first direction X. The same end refers to the position of one of the two ends of the main heat-exchange flow channel 11331. That is to say, the refrigerant enters the main region flow channel portion 11333 (specifically the upstream flow channel 11336) from one end through the main flow diversion node portion 11332, and then flows from the main region flow channel portion 11333 (specifically the downstream flow channel 11337) to the main flow confluence node portion 11334 located at the same end. It can be known that when the refrigerant circulates in one main heat-exchange flow channel 11331, it enters from the same end and exits from the same end.

The above design allows the main flow diversion and flow confluence region 1132 to be arranged on the same side of the main heat-exchange flow channel 11331 in the first direction X, so as to achieve a regular layout.

For example, in the second direction Y, the plurality of main flow diversion node portions 11332 and the plurality of main flow confluence node portions 11334 are arranged on the same straight line, or, in the second direction Y, a distribution region with a certain width is formed. This distribution region has a certain width in the first direction X and extends in a strip shape in the second direction Y. In this case, the plurality of main flow diversion node portions 11332 and the plurality of main flow confluence node portions 11334 are all distributed in the distribution region.

In this embodiment, both the main flow diversion node portion 11332 and the main flow confluence node portion 11334 are located at the same end of the main region flow channel portion 11333, so that other pipelines in communication with the main flow diversion node portion 11332 and the main flow confluence node portion can be concentrated on one side of the main heat-exchange flow channel 11331 for arrangement, which helps to improve the concentration degree of the arrangement of other flow channel sections.

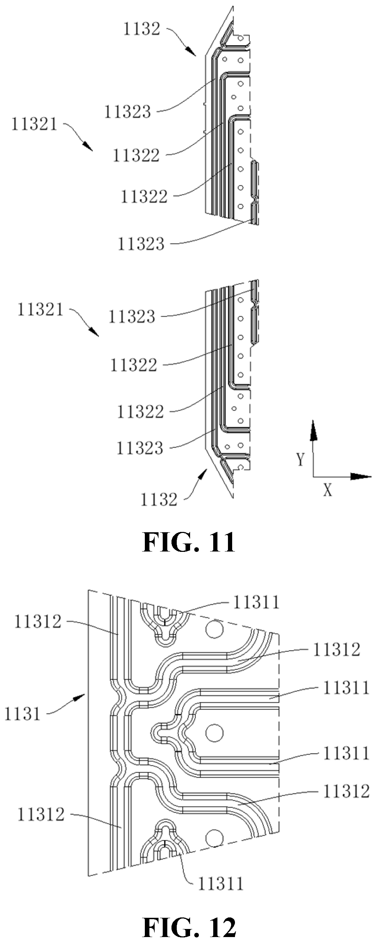

In some embodiments, referring to FIG. 5 and FIG. 11, the refrigerant heat-exchange component 1130 includes the main flow diversion and flow confluence region 1132 and a heat-exchange region 1133. The main heat-exchange flow channels 11331 are distributed in the heat-exchange region 1133. The main flow diversion and flow confluence region 1132 includes a plurality of main flow channels 11321. A part of the main flow channels 11321 are respectively in communication with the main flow diversion node portions 11332, and the other part of the main flow channels 11321 are respectively in communication with the main flow confluence node portions 11334. the number of the main flow channels 11321 is less than or equal to the total number of the main flow diversion node portions 11332 and the main flow confluence node portions 11334.

Specifically, the refrigerant heat-exchange component 1130 may include at least two parts, namely the main flow diversion and flow confluence region 1132 and the heat-exchange region 1133. Refrigerant flow channels are distributed in both the main flow diversion and flow confluence region 1132 and the heat-exchange region 1133, and are used for the circulation of the refrigerant. The refrigerant flow channels within the main flow diversion and flow confluence region 1132 are called the main flow channels 11321. The main flow channels 11321 serve the functions of flow diversion and flow convergence. It can be understood that the main flow diversion and flow confluence region 1132 includes a plurality of main flow channels 11321, where a part of the plurality of main flow channels 11321 within the main flow diversion and flow confluence region 1132 are used for flow diversion, and the part of the main flow channels 11321 for flow diversion can be in communication with the main flow diversion node portion 11332 in the main heat-exchange flow channel 11331. Other main flow channels 11321 within the main flow diversion and flow confluence region 1132 are used for flow convergence, and the part of the main flow channels 11321 can be in communication with the main flow confluence node portion 11334 in the main heat-exchange flow channel 11331. The main flow diversion and flow confluence region 1132 can be configured to avoid the projection of the battery cell assembly 1110 on the refrigerant heat-exchange component 1130, that is, the battery cell assembly 1110 may not be opposite to the main flow diversion and flow confluence region 1132. The refrigerant flow channel within the heat-exchange region 1133 is called the main heat-exchange flow channel 11331. The heat-exchange region 1133 is mainly used for exchanging heat with the battery cell assembly 1110. Therefore, the heat-exchange region 1133 needs to be disposed opposite to the battery cell assembly 1110. That is to say, the projections of the heat-exchange region 1133 and the battery cell assembly 1110 on the refrigerant heat-exchange component 1130 need to coincide. The refrigerant flow channel within the heat-exchange region 1133 is configured to exchange heat with the battery cell assembly 1110.

The number of the main flow channels 11321 is less than or equal to the total number of the main flow diversion node portions 11332 and the main flow confluence node portions 11334. When the number of the main flow channels 11321 is equal to the total number of the main flow diversion node portions 11332 and the main flow confluence node portions 11334, it can be known that each flow diversion node portion and each flow confluence node portion have an independent corresponding main flow channel 11321. This makes the refrigerant more precise in a distribution and collection process and circulate smoother. It is also conducive to making all the main heat-exchange flow channels 11331 have the consistent heat-exchange capacity, so as to make the temperature distribution on the heat-exchange surface 1134 more uniform.

When the number of the main flow channels 11321 is less than the total number of the main flow diversion node portions 11332 and the main flow confluence node portions 11334, a plurality of flow diversion node portions may share one main flow channel 11321, or a plurality of flow confluence node portions may share one main flow channel 11321, or both of the above cases exist. The number of the main flow channels 11321 may be reduced, which thus can optimize and simplify the structure in the main flow diversion and flow confluence region 1132 in the refrigerant heat-exchange component 1130, and help to achieve more rational use of the internal space of the refrigerant heat-exchange component 1130. In addition, when an inlet and outlet region 1131 is provided, since the inlet and outlet region 1131 is located upstream of the main flow diversion and flow confluence region 1132, after the number of the main flow channels 11321 is reduced, the number of the flow channels in the inlet and outlet region 1131 is consistent with the number of the main flow channels 11321. The number of the flow channels in the inlet and outlet region 1131 can be relatively reduced, which facilitates the one-to-one matching and connection between the main flow channels 11321 and the flow channels in the inlet and outlet region 1131, and helps to simplify and optimize the flow channel layout in the inlet and outlet region 1131.

In this embodiment, by controlling the number of the main flow channels 11321, the layout and structure of the main flow channels 11321 within the main flow diversion and flow confluence region 1132 can be rationally planned, thereby improving the space utilization rate and achieving the purpose of uniform flow diversion and concentrated flow confluence.

In some embodiments, referring to FIG. 5 and FIG. 9 to FIG. 11, the plurality of main flow channels 11321 are divided into a plurality of first main flow channels 11322 and a plurality of second main flow channels 11323. Each main region flow channel portion 11333 includes an upstream flow channel 11336 and a downstream flow channel 11337. The first main flow channel 11322, the main flow diversion node portion 11332, the upstream flow channel 11336, the downstream flow channel 11337, the main flow confluence node portion 11334, and the second main flow channel 11323 are disposed in communication with each other in sequence. the number of the first main flow channels 11322 is less than or equal to the total number of the main flow diversion node portions 11332.

Specifically, the upstream flow channel 11336 can be understood as an inlet flow channel, and the downstream flow channel 11337 can be understood as a loop flow channel, with the refrigerant flowing from the upstream flow channel 11336 into the downstream flow channel 11337.

The first main flow channel 11322 can be understood as a flow channel in an inflow direction. The refrigerant flows from the first main flow channel 11322 into the upstream flow channel 11336 through the main flow diversion node portion 11332. The second main flow channel 11323 can be understood as a flow channel in an outflow direction. The refrigerant flows from the downstream flow channel 11337 into the second main flow channel 11323 through the main flow confluence node portion 11334. The first main flow channel 11322, the main flow diversion node portion 11332, the upstream flow channel 11336, the downstream flow channel 11337, the main flow confluence node portion 11334, and the second main flow channel 11323 are in communication with each other in sequence to form a circulation loop.

Regarding the number of the first main flow channels 11322, the number of the first main flow channels 11322 is less than or equal to the total number of the main flow diversion node portions 11332. When the number of the first main flow channels 11322 is equal to the total number of the main flow diversion node portions 11332, it can be known that each flow diversion node portion corresponds to an independent first main flow channel 11322. This makes the refrigerant more precise in a distribution process and circulate smoother, which helps to make all the main heat-exchange flow channels 11331 have the consistent heat-exchange capacity, so as to make the temperature distribution on the heat-exchange surface 1134 more uniform.

When the number of the first main flow channels 11322 is less than the total number of the main flow diversion node portions 11332, the plurality of flow diversion node portions may share one first main flow channel 11322, thereby reducing the number of the first main flow channels 11322. This can optimize and simplify the structure in the main flow diversion and flow confluence region 1132 in the refrigerant heat-exchange component 1130, thereby making it less likely for the first main flow channel 11322 to interfere with the second main flow channel 11323, and helping to achieve more rational use of the internal space of the refrigerant heat-exchange component 1130. In addition, when the inlet and outlet region 1131 is provided, since the inlet and outlet region 1131 is located upstream of the main flow diversion and flow confluence region 1132, reducing the number of the first main flow channels 11322 allows the number of flow channels in the inlet and outlet region 1131 (specifically first flow-direction flow channels 11311 or inflow-direction flow channels) to be set consistent with that of the first main flow channels 11322. The number of the flow channels in the inlet and outlet region 1131 can be relatively reduced, thereby facilitating one-to-one matching and connection between the first main flow channels 11322 and the flow channels in the inlet and outlet region 1131, which helps to simplify and optimize the flow channel layout within the inlet and outlet region 1131.

In this embodiment, by controlling the number of the first main flow channels 11322, the layout and structure of the first main flow channels 11322 in the main flow diversion and flow confluence region 1132 can be rationally planned, which helps to avoid the second main flow channel 11323, so as to improve the space utilization rate, thereby achieving the goal of uniform flow diversion.

In some embodiments, referring to FIG. 5 and FIG. 9 to FIG. 11, the plurality of main flow channels 11321 are divided into a plurality of first main flow channels 11322 and a plurality of second main flow channels 11323. Each main region flow channel portion 11333 includes an upstream flow channel 11336 and a downstream flow channel 11337. The first main flow channel 11322, the main flow diversion node portion 11332, the upstream flow channel 11336, the downstream flow channel 11337, the main flow confluence node portion 11334, and the second main flow channel 11323 are disposed in communication with each other in sequence. The number of the second main flow channels 11323 is less than or equal to the total number of the main flow confluence node portions 11334.

Similarly, the upstream flow channel 11336 can be understood as an inlet flow channel, and the downstream flow channel 11337 can be understood as a loop flow channel, with the refrigerant flowing from the upstream flow channel 11336 into the downstream flow channel 11337. The first main flow channel 11322 can be understood as a flow channel in an inflow direction. The refrigerant flows from the first main flow channel 11322 into the upstream flow channel 11336 through the main flow diversion node portion 11332. The second main flow channel 11323 can be understood as a flow channel in an outflow direction. The refrigerant flows from the downstream flow channel 11337 into the second main flow channel 11323 through the main flow confluence node portion 11334. The first main flow channel 11322, the main flow diversion node portion 11332, the upstream flow channel 11336, the downstream flow channel 11337, the main flow confluence node portion 11334, and the second main flow channel 11323 are in communication with each other in sequence to form a circulation loop.

Regarding the number of the second main flow channels 11323, the number of the second main flow channels 11323 is less than or equal to the total number of the main flow confluence node portions 11334. When the number of the second main flow channels 11323 is equal to the total number of the main flow confluence node portions 11334, it can be known that each flow confluence node portion corresponds to an independent second main flow channel 11323. This makes the refrigerant more precise in a distribution process and circulate smoother, which helps to make all the main heat-exchange flow channels 11331 have the consistent heat-exchange capacity, so as to make the temperature distribution on the heat-exchange surface 1134 more uniform.

When the number of the second main flow channels 11323 is less than the total number of the main flow confluence node portions 11334, the plurality of flow confluence node portions may share one second main flow channel 11323, thereby reducing the number of the second main flow channels 11323. This can optimize and simplify a structure in the main flow diversion and flow confluence region 1132 in the refrigerant heat-exchange component 1130, thereby making it less likely for the second main flow channel 11323 to interfere with the first main flow channel 11322, and helping to achieve more rational use of the internal space of the refrigerant heat-exchange component 1130. In addition, when the inlet and outlet region 1131 is provided, since the inlet and outlet region 1131 can also be considered located downstream of the main flow diversion and flow confluence region 1132, reducing the number of the second main flow channels 11323 allows the number of flow channels in the inlet and outlet region 1131 (specifically, second flow-direction flow channels 11312 or outflow-direction flow channels) to be set consistent with that of the second main flow channels 11323. The number of the flow channels in the inlet and outlet region 1131 can be relatively reduced, thereby facilitating one-to-one matching and connection between the second main flow channels 11323 and the flow channels in the inlet and outlet region 1131, which helps to simplify and optimize the flow channel layout within the inlet and outlet region 1131.

In this embodiment, by controlling the number of the second main flow channels 11323, the layout and structure of the second main flow channels 11323 in the main flow diversion and flow confluence region 1132 can be rationally planned, which helps to avoid the first main flow channel 11322, so as to improve the space utilization rate, thereby achieving the goal of uniform flow diversion.

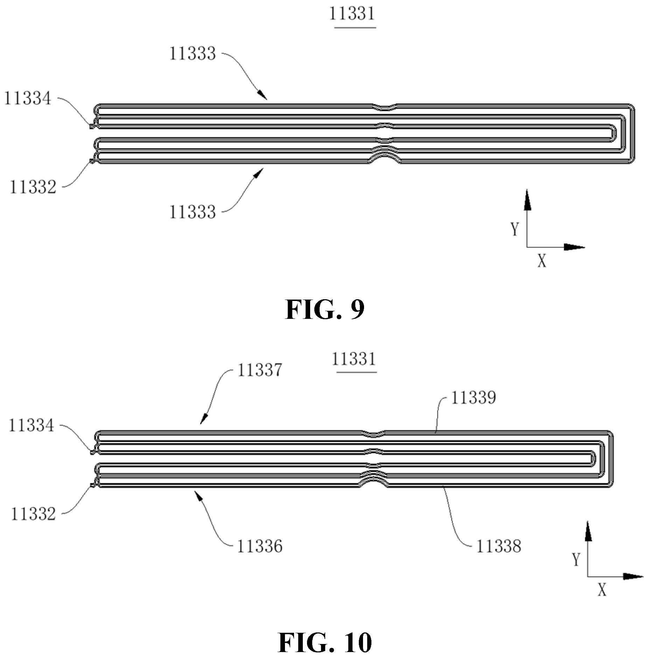

In some embodiments, referring to FIG. 10, each main region flow channel portion 11333 includes an upstream flow channel 11336 and a downstream flow channel 11337. The upstream flow channel 11336 includes a plurality of upstream sub-flow channels 11338 that are all in communication with the downstream flow channel 11337. The plurality of upstream sub-flow channels 11338 extend in the first direction X and are arranged opposite to and spaced apart from each other in the second direction Y. Each upstream sub-flow channel 11338 is in communication with the main flow diversion node portion 11332. The downstream flow channel 11337 is in communication with the main flow confluence node portion 11334.

Specifically, for the upstream flow channel 11336, the upstream flow channel 11336 may include a plurality of upstream sub-flow channels 11338. The plurality of upstream sub-flow channels 11338 may extend in the first direction X and be opposite to and spaced apart from each other in the second direction Y, so that the upstream flow channel 11336 forms a structural form in which a plurality of straight flow channel structures are in communication with each other in parallel. This allows for the arrangement of a greater number of upstream sub-flow channels 11338 within the same region. Within the same region, the width of each upstream sub-flow channel 11338 becomes smaller, so that the density increases, thereby increasing the flow velocity of the refrigerant within each upstream sub-flow channel 11338, which thus helps to increase the heat-exchange area and improve the heat-exchange efficiency.

The plurality of upstream sub-flow channels 11338 are connected to the same main flow diversion node portion 11332, and one or more main flow diversion node portions 11332 can be connected to one first main flow channel 11322, thereby realizing a structural form in which one first main flow channel 11322 is in communication with a plurality of upstream sub-flow channels 11338, which helps to improve the circulation smoothness of the refrigerant, reduce the pressure drop loss, and simplify the layout of the main flow diversion and flow confluence region 1132, thereby saving space.

In this embodiment, one first main flow channel 11322 is in communication with the plurality of upstream sub-flow channels 11338, which helps to simplify the structural layout of the main flow diversion and flow confluence region 1132, thereby saving space.

In some embodiments, referring to FIG. 10, each main region flow channel portion 11333 includes an upstream flow channel 11336 and a downstream flow channel 11337. The downstream flow channel 11337 includes a plurality of downstream sub-flow channels 11339 that are all in communication with the upstream flow channel 11336. The plurality of downstream sub-flow channels 11339 extend in the first direction X and are arranged opposite to and spaced apart from each other in the second direction Y. Each downstream sub-flow channel 11339 is in communication with the main flow confluence node portion 11334. The upstream flow channel 11336 is connected to the main flow diversion node portion 11332.

Specifically, for the downstream flow channel 11337, the downstream flow channel 11337 may include a plurality of downstream sub-flow channels 11339. The plurality of downstream sub-flow channels 11339 may extend in the first direction X and be opposite to and spaced apart from each other in the second direction Y, so that the downstream flow channel 11337 forms a structural form in which a plurality of straight flow channel structures are in communication with each other in parallel. This allows for the arrangement of a greater number of downstream sub-flow channels 11339 within the same region. Within the same region, the width of each downstream sub-flow channel 11339 becomes smaller, so that the density increases, thereby increasing the flow velocity of the refrigerant within each downstream sub-flow channel 11339, which thus helps to increase the heat-exchange area and improve the heat-exchange efficiency.

The plurality of downstream sub-flow channels 11339 are connected to the same main flow confluence node portion 11334, and one or more main flow confluence node portions 11334 can be connected to one second main flow channel 11323, thereby realizing a structural form in which one second main flow channel 11323 is in communication with a plurality of downstream sub-flow channels 11339, which helps to improve the circulation smoothness of the refrigerant, reduces the pressure drop loss, and helps to simplify the layout of the main flow diversion and flow confluence region 1132, thereby saving space.

In this embodiment, one second main flow channel 11323 is in communication with the plurality of downstream sub-flow channels 11339, which helps to simplify the structural layout of the main flow diversion and flow confluence region 1132, thereby saving space.

In some embodiments, referring to FIG. 5 and FIG. 6, each main region flow channel portion 11333 includes an upstream flow channel 11336 and a downstream flow channel 11337. The upstream flow channel 11336 in a part of the main region flow channel portion 11333 is disposed adjacent to the upstream flow channel 11336 in an adjacent main region flow channel portion 11333, and the downstream flow channel 11337 in a part of the main region flow channel portion 11333 is disposed adjacent to the downstream flow channel 11337 in an adjacent main region flow channel portion 11333.

Specifically, since the plurality of main heat-exchange flow channels 11331 are arranged and connected in parallel in the second direction Y, there must be two main heat-exchange flow channels 11331 arranged adjacent to each other, and a plurality of groups of such adjacently arranged main heat-exchange flow channels 11331 may be disposed.

Since the main flow diversion node portions 11332 in the main heat-exchange flow channel 11331 all need to be connected to the first main flow channel 11322, and the upstream flow channels 11336 in every two main heat-exchange flow channels 11331 are arranged adjacently, it can be known that the distance between the main flow diversion node portions 11332 of every two adjacent main heat-exchange flow channels 11331 is relatively reduced. Therefore, when two adjacent main flow diversion nodes are connected in one first main flow channel 11322, the circulating path of the first main flow channel 11322 can be reduced, which helps to reduce the circulating path of the refrigerant and shorten the circulating path of the refrigerant in the main flow diversion and flow confluence region 1132.

Similarly, since the main flow confluence node portions 11334 in the main heat-exchange flow channel 11331 all need to be connected to the second main flow channel 11323, and the downstream flow channels 11337 in every two main heat-exchange flow channels 11331 are arranged adjacently, it can be known that the distance between the main flow confluence node portions 11334 of every two adjacent main heat-exchange flow channels 11331 is relatively reduced. Therefore, when two adjacent main flow confluence nodes are connected in one second main flow channel 11323, the circulating path of the second main flow channel 11323 can be reduced, which helps to reduce the circulating path of the refrigerant and shorten the circulating path of the refrigerant in the main flow diversion and flow confluence region 1132.

Since the main flow diversion and flow confluence region 1132 is not mainly used for heat-exchange with the battery cells 1112, shortening the circulating path of the refrigerant within the main flow diversion and flow confluence region 1132 helps to reduce the heat loss, thereby improving the heat-exchange capacity of the heat-exchange region 1133.

In this embodiment, arranging the plurality of upstream flow channels 11336 adjacent to each other or the plurality of downstream flow channels 11337 adjacent to each other can shorten the circulating path of the main flow channel, thereby reducing the heat loss and facilitating improving the heat-exchange capacity.

In some embodiments, referring to FIG. 5 and FIG. 12, the refrigerant heat-exchange component 1130 further includes an inlet and outlet region 1131, the inlet and outlet region 1131 includes a first flow-direction flow channel 11311 and a second flow-direction flow channel 11312. A flow direction of the refrigerant in the first flow-direction flow channel 11311 is opposite to a flow direction of the refrigerant in the second flow-direction flow channel 11312. A plurality of main heat-exchange flow channels 11331 are symmetrically arranged on both sides of an axis of symmetry parallel to the first direction X, and the inlet and outlet region 1131 is arranged at one end of the axis of symmetry.

Specifically, the axis of symmetry can be understood as the axis of symmetry of the heat-exchange surface 1134. The main heat-exchange flow channels 11331 on both sides of the axis of symmetry are arranged symmetrically, which thus helps to make the temperature distribution of the regions on both sides of the axis of symmetry on the heat-exchange surface 1134 symmetrical. The flow characteristics of the refrigerant in each of the main heat-exchange flow channels 11331 on both sides of the axis of symmetry are more consistent. The pressure, flow rate, and other parameters of each of the main heat-exchange flow channels 11331 on both sides of the axis of symmetry are similar, which facilitates the uniform distribution of the refrigerant in the entire heat-exchange region 1133, and facilitates reducing the problem of uneven refrigerant distribution caused by unreasonable flow channel arrangement, thereby further improving the uniformity and efficiency of heat-exchange.

Since the inlet and outlet region 1131 is concentrated on the axis of symmetry and located at one end, the refrigerant can be uniformly delivered from the center of symmetry to both sides of the axis of symmetry, which makes the refrigerant distribution in the main heat-exchange flow channels 11331 on both sides of the axis of symmetry more symmetrical and uniform.

In this embodiment, the inlet and outlet region 1131 is arranged at one end of the axis of symmetry, which helps to achieve uniform and symmetrical distribution of the refrigerant after the refrigerant enters the refrigerant flow channel component.

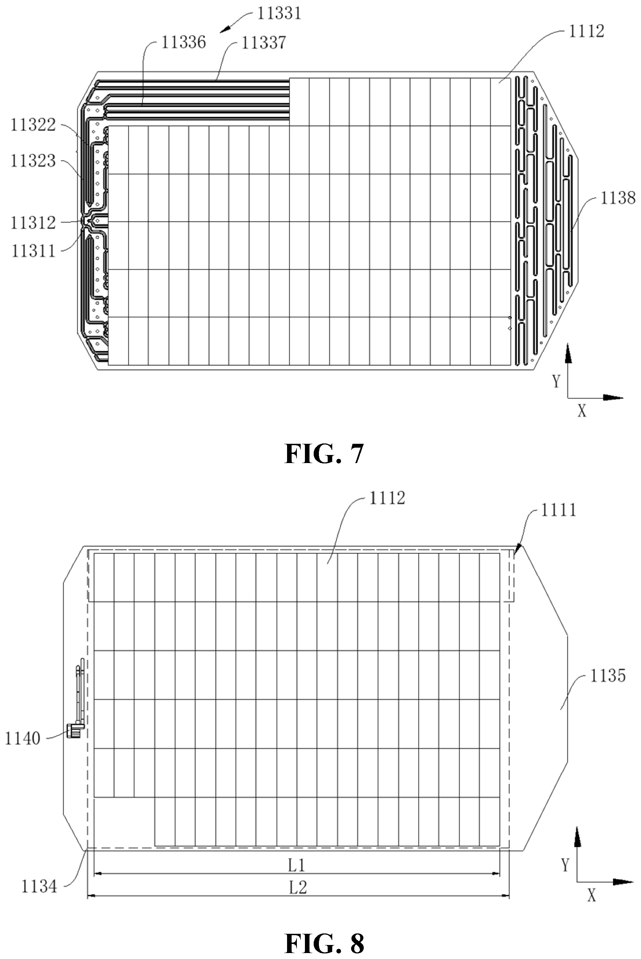

In some embodiments, referring to FIG. 7 and FIG. 8, the number of the battery cell groups 1111 is equal to the number of the main heat-exchange flow channels 11331.

Specifically, the number of the battery cell groups 1111 is equal to the number of main heat-exchange flow channels 11331. This can be understood as that one battery cell group 1111 corresponds to one main heat-exchange flow channel 11331. That is, each battery cell group 1111 has an independent corresponding main heat-exchange flow channel 11331, so that precise thermal management can be carried out according to the specific heat generation of the battery cell group 1111.

Different battery cell groups 1111 may generate varying degrees of heat during charging and discharging. By matching one battery cell group 1111 with one main heat-exchange flow channel 11331, the heat-exchange capacity of the corresponding main heat-exchange flow channel 11331 can be adjusted according to the needed heat-exchange requirement of the battery cell group 1111. For example, by adjusting the flow rate, flow velocity, pressure, and other data of the refrigerant in the corresponding main heat-exchange flow channel 11331, each battery cell group 1111 can be cooled or heated appropriately, which allows each battery cell group 1111 to operate within a better operating temperature range, thereby facilitating improving the performance and service life of the battery apparatus 1100.

In addition, when a certain battery cell group 1111 or a corresponding main heat-exchange flow channel 11331 thereof fails, it is not likely to affect the normal operation of other battery cell groups 1111. This enhances the fault-tolerant capacity of the battery apparatus 1100. Even if some of the main heat-exchange flow channels 11331 malfunction, the entire battery apparatus 1100 can still maintain a certain level of operation, thereby improving the reliability and stability of the system and reducing the risk of the entire system being paralyzed due to a single-point failure.

Furthermore, one battery cell group 1111 corresponds to one main heat-exchange flow channel 11331, which enables more efficient heat-exchange between the refrigerant and the battery cell group 1111. When the refrigerant flows in the main heat-exchange flow channel 11331, it can absorb or release the heat of the battery cell group 1111 more evenly, which improves the heat-exchange efficiency, helps to better control the temperature consistency of the battery cell group 1111, and improves the performance of the entire battery apparatus 1100.

In this embodiment, the number of the battery cell groups 1111 is equal to the number of the main heat-exchange flow channels 11331, which can achieve balanced and stable heat-exchange for each battery cell group 1111 in a targeted mode.

In some embodiments, referring to FIG. 8, the battery cell group 1111 has a first length L1 in the first direction X, and each main heat-exchange flow channel 11331 correspondingly forms the heat-exchange surface 1134 on a surface of the refrigerant heat-exchange component 1130. The heat-exchange surface 1134 has a second length L2 in the first direction X, and a ratio of the first length L1 to the second length L2 is in a range of 0.8 to 1.2.

Specifically, when the ratio of the first length L1 to the second length L2 is greater than or equal to 0.8 and less than 1, it can be known that in the first direction X, the coverage region of the heat-exchange surface 1134 extends beyond the edge of one end or both ends of the battery cell assembly 1110, and the heat-exchange surface 1134 is larger. Understandably, the larger the heat-exchange surface 1134, the greater the number of the main heat-exchange flow channels 11331 in the corresponding heat-exchange region 1133. A larger volume of refrigerant can circulate in the main heat-exchange flow channels 11331, which helps to improve the heat-exchange capacity of the heat-exchange surface 1134 and the refrigerant heat-exchange component 1130.

For example, considering the thermal expansion of the battery cell 1112 during charging and discharging, when the first length L1 is less than the second length L2, the heat-exchange surface 1134 can provide a certain space margin for the battery cell group 1111 during thermal expansion. After expansion, each battery cell group 1111 can also have a sufficient heat-exchange area with the heat-exchange surface 1134 to improve the stability and reliability of heat-exchange.

When the ratio of the first length L1 to the second length L2 is close to or equal to 1, it means that the length of the battery cell group 1111 in the first direction X is basically equal to the length of the heat-exchange surface 1134. The heat-exchange surface 1134 can cover the surface of the battery cell assembly 1110 to a greater extent and perform more sufficient heat-exchange with the battery cell assembly 1110, which helps to reduce the heat loss and improve the heat-exchange efficiency.

When the ratio of the first length L1 to the second length L2 is greater than 1 and less than or equal to 1.2, it can be known that the battery cell assembly 1110 may cover a region outside the heat-exchange surface 1134. For example, the surface, opposite to the battery cell 1112, on the refrigerant heat-exchange component 1130 is the first surface 1135, and the heat-exchange surface 1134 is located on the first surface 1135. The heat-exchange surface 1134 corresponds to the heat-exchange region 1133, and one side of the heat-exchange region 1133 is the main flow diversion and flow confluence region 1132. That is to say, the battery cell assembly 1110 may extend to the first surface 1135 corresponding to the main flow diversion and flow confluence region 1132, so that the number of the battery cells 1112 in the box body assembly 1120 can be increased, which thus helps to increase the capacity of the battery apparatus 1100.

Considering that the first surface 1135 has heat transfer properties, a region adjacent to the heat-exchange surface 1134 may still have a certain heat-exchange capacity. Furthermore, in the main flow diversion and flow confluence region 1132, the first main flow channel 11322 and the second main flow channel 11323 are distributed. The refrigerant circulates in the first main flow channel 11322 and the second main flow channel 11323, so that the main flow diversion and flow confluence region 1132 also has a certain heat-exchange capacity, which can exchange heat for a part of the battery cells 1112, thereby reducing energy waste and improving the heat-exchange efficiency.

In this embodiment, by controlling relative lengths of the battery cell group 1111 and the heat-exchange surface 1134 in the first direction X, the battery cells 1112 can be rationally arranged to facilitate reducing energy waste, thereby improving the heat-exchange efficiency.

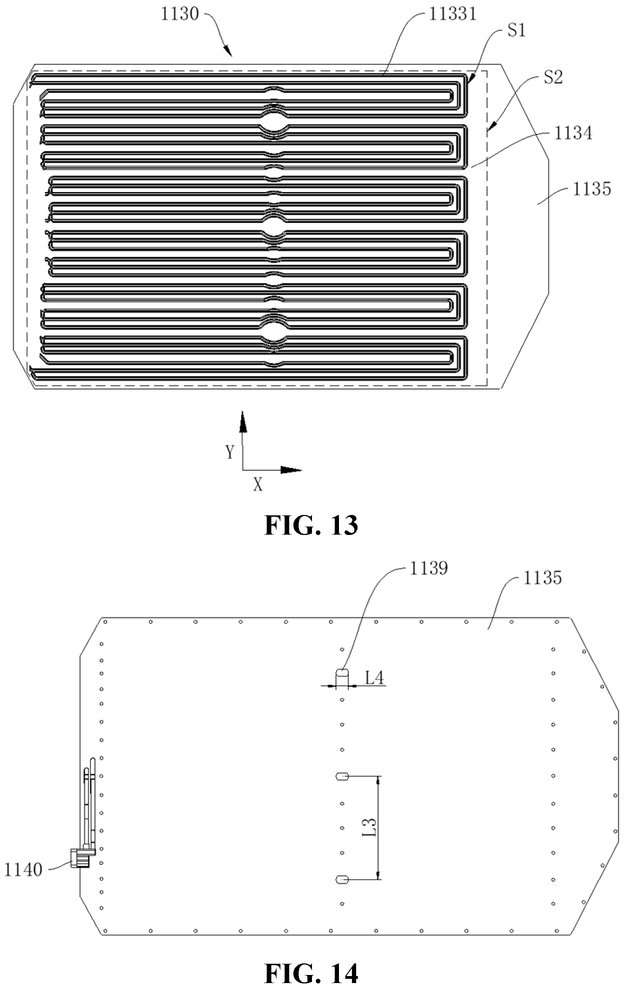

In some embodiments, referring to FIG. 13, the refrigerant heat-exchange component 1130 is provided with a heat-exchange surface 1134 opposite to the battery cell assembly 1110, each main heat-exchange flow channel 11331 is configured to be opposite to the heat-exchange surface 1134, and a ratio of an area S1 of a projection region of each main heat-exchange flow channel 11331 on the heat-exchange surface 1134 to an area S2 of the heat-exchange surface 1134 is greater than or equal to 0.4 and less than or equal to 0.8.

Specifically, the heat-exchange surface 1134 should be understood as a partial region of the first surface 1135 of the refrigerant heat-exchange component 1130, the first surface 1135 is the surface of the refrigerant heat-exchange component 1130 opposite to the battery cell assembly 1110, and the heat-exchange surface 1134 is the surface, opposite to the battery cell assembly 1110 and performing heat-exchange, of the heat-exchange region 1133.

For the refrigerant heat-exchange component 1130 itself, the main heat-exchange flow channel 11331 should be opposite to and matched with the heat-exchange surface 1134. Since gaps are formed between adjacent heat-exchange sub-flow channels 11335 in the main heat-exchange flow channel 11331, it can be known that the arrangement area of the main heat-exchange flow channel 11331 (i.e., the area S1 of the projection region on the heat-exchange surface 1134) may be smaller than the area S2 of the heat-exchange surface 1134. However, if the arrangement area of the main heat-exchange flow channel 11331 is too small, it may affect the heat-exchange capacity and effect. If the arrangement area of the main heat-exchange flow channel 11331 is too large, that is, the arrangement density of the main heat-exchange flow channel 11331 is relatively large, the strength of the gap between every two adjacent heat-exchange sub-flow channels 11335 may be affected. Therefore, it is necessary to reasonably control the proportion of the main heat-exchange flow channel 11331 in the heat-exchange region 1133.

Therefore, in this example, the ratio of the area S1 of the projection region of the main heat-exchange flow channel 11331 on the heat-exchange surface 1134 to the area S2 of the heat-exchange surface 1134 is greater than or equal to 0.4 and less than or equal to 0.8. The above ratio can take any value between 0.4 and 0.8. For example, the above ratio can take 0.5, 0.6, 0.7, etc. The above ratio of 0.4 to 0.8 makes the spacing distance between the adjacent heat-exchange sub-flow channels 11335 more reasonable, that is, the thickness of the flow channel wall is more reasonable, and the flow channel wall is less likely to be washed away by the refrigerant.

In this embodiment, by reasonably controlling the ratio of the area of the projection region of the main heat-exchange flow channel 11331 on the heat-exchange surface 1134, it is possible to ensure that there is a sufficient heat-exchange area between the refrigerant and the battery cell 1112, which reduces the risk of the main heat-exchange flow channel 11331 being too dense or too sparse, helps to optimize the heat-exchange effect, and facilitates the design and manufacturing of the main heat-exchange flow channel 11331 at the same time.

In some embodiments, referring to FIG. 5, FIG. 6, and FIG. 14 to FIG. 16, the refrigerant heat-exchange component 1130 is provided with a first surface 1135 and a second surface opposite to each other, and the first surface 1135 or the second surface is disposed opposite to the battery cell assembly 1110; and the refrigerant heat-exchange component 1130 includes a plurality of mounting holes 1139, the plurality of mounting holes 1139 are configured in a penetrating mode between the first surface 1135 and the second surface and are disposed to avoid the main heat-exchange flow channel 11331.

Specifically, the first surface 1135 and the second surface are two opposite surfaces of the refrigerant heat-exchange component 1130. The battery cell assembly 1110 can be disposed opposite to the first surface 1135, and the heat-exchange surface 1134 is a partial region of the first surface 1135.

The main function of the mounting hole 1139 is to facilitate a stable connection between the refrigerant heat-exchange component 1130 and other structures within the battery apparatus 1100. For example, by arranging bolts, rivets, or other connectors in the mounting hole 1139 in a penetrating mode, the refrigerant heat-exchange component 1130 can be installed at a specific position of the box body assembly 1120 or the vehicle 1000, thereby fixing the refrigerant heat-exchange component 1130 and reducing vibration and displacement of the refrigerant heat-exchange component 1130 during the operation of the battery apparatus 1100.

The mounting hole 1139 can be a through hole structure, so that the mounting hole 1139 forms a communicating hole that passes through the first surface 1135 and the second surface. The mounting hole 1139 can be arranged in the heat-exchange region 1133. For example, the mounting hole 1139 is arranged in a middle region of the heat-exchange region 1133 in the first direction X. The mounting hole 1139 can be arranged between two heat-exchange sub-flow channels 11335 and is not in communication with the heat-exchange sub-flow channel 11335. For example, the heat-exchange sub-flow channel 11335 can refer to the upstream sub-flow channel 11338 or the downstream sub-flow channel 11339. The mounting hole 1139 can be arranged between two upstream sub-flow channels 11338, or between two downstream sub-flow channels 11339, or between one upstream sub-flow channel 11338 and one downstream sub-flow channel 11339.

The diameter of the mounting hole 1139 can be larger than the spacing distance between every two adjacent heat-exchange sub-flow channels 11335. Therefore, the heat-exchange sub-flow channel 11335 can be bent for avoiding at the position opposite to the mounting hole 1139. That is to say, at the position, opposite to the mounting hole 1139, of the heat-exchange sub-flow channel 11335, the heat-exchange sub-flow channel 11335 may be formed into a curved shape, for example, a semi-circular curved shape.

In this embodiment, by providing the mounting holes 1139, it is convenient to connect and fix the refrigerant heat-exchange component 1130 to other components through bolts or other locking devices, thereby improving the convenience of connecting the refrigerant heat-exchange component 1130 to other components.

In some embodiments, referring to FIG. 5, FIG. 6, and FIG. 14 to FIG. 16, in the first direction X, the plurality of mounting holes 1139 are arranged in a middle region of the refrigerant heat-exchange component 1130 and disposed spaced apart from each other in the second direction Y; and/or, in the second direction Y, the plurality of mounting holes 1139 are arranged in the middle region of the refrigerant heat-exchange component 1130 and disposed spaced apart from each other in the first direction X.

Specifically, in the first direction X, the mounting hole 1139 is arranged in the middle region of the refrigerant heat-exchange component 1130, which helps to make the force on the refrigerant heat-exchange component 1130 more balanced during installation and fixing. When the refrigerant heat-exchange component 1130 is connected and fixed to other components through these mounting holes 1139, mounting points are located in the middle, which can effectively reduce the deformation or damage of the components caused by an uneven force, thereby helping to improve the mechanical stability of the refrigerant heat-exchange component 1130.

Since the heat-exchange sub-flow channels 11335 around the mounting hole 1139 need to form a curved structure for avoidance, in order to improve the structural consistency among the plurality of main heat-exchange flow channels 11331, the mounting hole 1139 can be disposed between two adjacent main heat-exchange flow channels 11331, and a curved structure is formed on each main heat-exchange flow channel 11331, so that the structural forms of all the main heat-exchange flow channels 11331 are consistent, which helps to improve the consistency of the refrigerant circulating in each main heat-exchange flow channel 11331, thereby facilitating improving the temperature equalization of the heat-exchange surface 1134.

In the second direction Y, the plurality of mounting holes 1139 can be configured on a straight line parallel to the second direction Y to improve the regularity of the structural layout.

Optionally, in the second direction Y, the refrigerant heat-exchange component 1130 is provided with a middle region, and in the second direction Y, the plurality of mounting holes 1139 are arranged in the middle region of the refrigerant heat-exchange component 1130 and disposed spaced apart from each other in the first direction X. In the first direction X, the plurality of mounting holes 1139 can be configured on a straight line parallel to the first direction Y to improve the regularity of the structural layout.

Optionally, the mounting holes 1139 are arranged in both the first direction X and the second direction Y, and the plurality of mounting holes 1139 are arranged in a cross shape in the middle region of the refrigerant heat-exchange component 1130.

In this embodiment, the plurality of mounting holes 1139 are arranged in the middle of the refrigerant heat-exchange component 1130 and are evenly spaced, which thus helps to improve the balance of the force on the refrigerant heat-exchange component 1130 and makes the layout between the main heat-exchange flow channel 11331 and the mounting holes 1139 more regular.

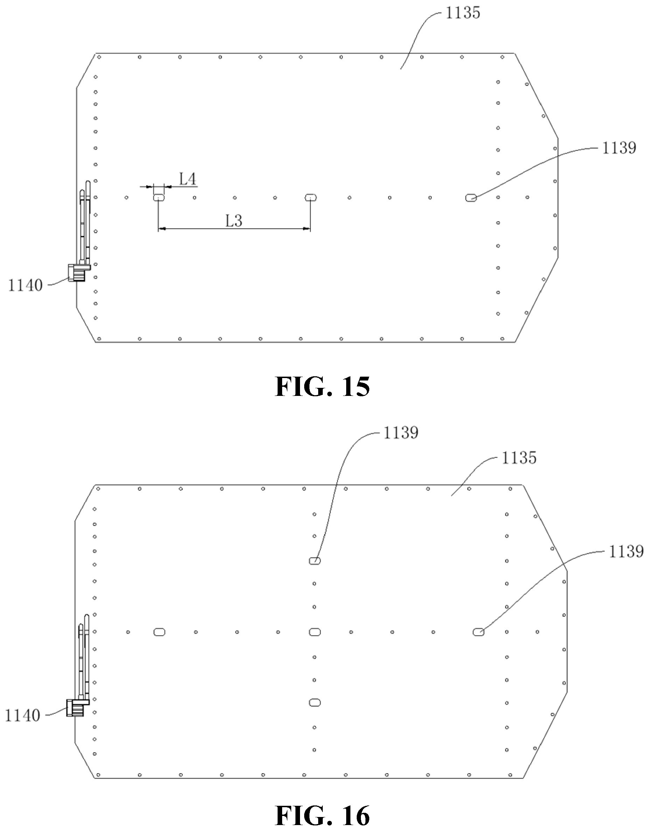

In some embodiments, referring to FIG. 14 and FIG. 15, the spacing L3 between every two adjacent mounting holes 1139 ranges from 300 mm to 1000 mm; and/or, the outer diameter L4 of the mounting hole 1139 is 30 mm to 60 mm.

Specifically, the spacing L3 between every two adjacent mounting holes 1139 should be understood as a distance between the centers of the two mounting holes 1139 (for circular holes, the center is called the center of a circle). The spacing L3 between every two adjacent mounting holes 1139 can be any value between 300 mm and 1000 mm.

When the spacing approaches 300 mm, it can be known that the arrangement of the mounting holes 1139 is relatively dense. The smaller spacing distance may allow the refrigerant heat-exchange component 1130 to obtain denser support at the mounting point, which can better withstand the pressure and tension applied by components such as battery packs, reduce the deformation of components due to stress during use, and improve the stability of the entire structure.

When the spacing approaches 1000 mm, it can be known that the arrangement of the mounting holes 1139 is relatively sparse. The larger spacing distance may allow each mounting point to bear a relatively large force. Therefore, with a larger spacing, the refrigerant heat-exchange component 1130 should have a greater strength and rigidity to reduce the risk of stress concentration and deformation. Although the stress on the mounting holes 1139 increases, a smaller number of mounting holes 1139 can reduce damage to the refrigerant heat-exchange component and simplify the structural design, which has a little impact on the rigidity and strength of the refrigerant component. Therefore, the number of the mounting holes 1139 can be reasonably arranged according to the structural strength of the refrigerant heat-exchange component 1130.

The outer diameter L4 of the mounting hole 1139 is 30 mm to 60 mm. The smaller mounting hole 1139 occupies less space on the surface of the refrigerant heat-exchange component 1130, which helps to maintain the integrity of the heat-exchange surface 1134 and reduce the impact on heat-exchange. The mounting hole 1139 with the larger outer diameter can accommodate connectors in larger specifications and withstand a greater tensile force, pressure and shear force, which helps to improve connection stability.

In this embodiment, considering that the arrangement of mounting holes 1139 may affect the strength and rigidity of the refrigerant heat-exchange component 1130 and the connection stability, the spacing between the mounting holes 1139 is controlled between 300 mm and 1000 mm and the outer diameter of the mounting holes 1139 is controlled between 30 mm and 60 mm. This allows for a further balance between the rigidity and strength of the refrigerant heat-exchange component 1130 and the connection stability.

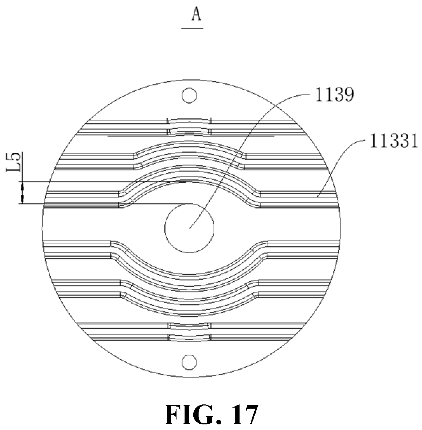

In some embodiments, referring to FIG. 17, the spacing distance L5 between each mounting hole 1139 and the main heat-exchange flow channel 11331 is greater than 5 mm.

Specifically, the spacing distance should be understood as the distance between the hole wall of the mounting hole 1139 and the flow channel wall of the main heat-exchange flow channel 11331. In other words, the wall thickness of the main heat-exchange flow channel 11331 close to the mounting hole 1139 can be considered as the thickness of a weak point on the flow channel wall of the main heat-exchange flow channel 11331.

Since the refrigerant exerts a compressive force on the flow channel wall of the main heat-exchange flow channel 11331, and there is pressure inside the main heat-exchange flow channel 11331, in order to prevent the weak point, close to the main heat-exchange flow channel 11331, of the mounting hole 1139 from being easily damaged, it is necessary to control the spacing distance L5 between each mounting hole 1139 and the main heat-exchange flow channel 11331 to be greater than 5 mm, so as to improve the bearing reliability of the main heat-exchange flow channel 11331.

In this embodiment, controlling the spacing distance L5 between each mounting hole 1139 and the main heat-exchange flow channel 11331 to be greater than 5 mm can reduce the risk of the main heat-exchange flow channel 11331 being destroyed by rush of water.

In some embodiments, referring to FIG. 5, a plurality of cavities 1138 are also formed in the refrigerant heat-exchange component 1130, and each cavity 1138 is configured to avoid the main heat-exchange flow channel 11331.

The cavity 1138 can be understood as the hollow space inside the refrigerant heat-exchange component 1130. For example, during the manufacturing process of the refrigerant heat-exchange component 1130, the refrigerant heat-exchange component 1130 includes an upper plate and a lower plate, which are welded and fixed together. During welding, a large amount of gas is generated. If such gas cannot be discharged in time, defects such as pores and the like may be formed in a weld, reducing the welding quality and the sealing performance of the weld. The cavity 1138, as a structural cavity, provides an exhaust channel for the gas generated during welding, thereby allowing the gas to escape smoothly and reducing welding defects caused by gas accumulation. This ensures the quality and reliability of the welding, facilitates improving the sealing performance of the refrigerant heat-exchange component 1130, and reduces the risk of refrigerant leakage.

In addition, by additionally disposing the plurality of cavities 1138 in the space outside the main heat-exchange flow channel 11331, the overall structural strength of the refrigerant heat-exchange component 1130 can be improved. The presence of the cavity 1138 alters the overall structure of the refrigerant heat-exchange component 1130, thereby giving the refrigerant heat-exchange component better mechanical properties. From a mechanical point of view, the cavity 1138 can be used as a reinforcing structure, which can effectively improve the bending and compressive strength of the refrigerant heat-exchange component 1130. When the refrigerant heat-exchange component 1130 is subjected to an external force, the cavity 1138 can disperse the stress and reduce stress concentration, which enables the refrigerant heat-exchange component 1130 to withstand a greater external force without deformation or damage, thereby improving the stability and reliability of the entire battery apparatus 1100 and prolonging the service life thereof.

The plurality of cavities 1138 are configured at one end or both ends of the refrigerant heat-exchange component 1130 in the first direction X.

In this embodiment, by disposing the plurality of cavities 1138, the functions of flow guiding and air venting can be achieved during the welding process, which helps to improve the welding quality and welding tightness, and helps to improve the overall structural strength of the refrigerant heat-exchange component 1130.

In some embodiments, referring to FIG. 2, the box body assembly 1120 includes a box body 1121 being provided with an accommodating cavity 1124, and the refrigerant heat-exchange component 1130 is connected to the box body 1121 and accommodated in the accommodating cavity 1124; and the refrigerant heat-exchange component 1130 is disposed opposite to the battery cell assembly 1110.

Specifically, the box body 1121 may include a cover body 1122, a box frame 1123, and a box bottom plate 1125. The cover body 1122 and the box frame 1123 cover each other, and an opening is formed in a side of the box frame 1123 opposite to the cover body 1122. It can be understood that the cover body 1122 and the box frame 1123 are connected to form a groove structure with an opening. The box bottom plate 1125 is opposite to the cover body 1122 and covers the opening. The cover body 1122, the box frame 1123, and the box bottom plate 1125 together define the accommodating cavity 1124 for accommodating the battery cell assembly 1110. Both the cover body 1122 and the box bottom plate 1125 can be a plate-shaped structure, and the box frame 1123 can be a hollow structure with both ends open. For example, the box frame 1123 is an annular frame structure. The cover body 1122 covers one open side of the box frame 1123, and the box bottom plate 1125 is connected to the other open (i.e., opening) side of the box frame 1123. The cover body 1122 can be disposed opposite to the box bottom plate 1125. The box body 1121 may be in various shapes, such as a cylinder or a cuboid.

The refrigerant heat-exchange component 1130 can be connected to the box body 1121 and accommodated in the accommodating cavity 1124 so as to be opposite to the box bottom plate 1125. The battery cell assembly 1110 is opposite to the refrigerant heat-exchange component 1130, so that the refrigerant heat-exchange component can exchange heat with the battery cell assembly 1110 while also supporting the battery cell assembly 1110.

In this embodiment, the refrigerant heat-exchange component 1130 can be accommodated in the accommodating cavity 1124 and disposed opposite to the battery cell assembly 1110, so that the refrigerant heat-exchange component can exchange heat with the battery cell assembly 1110 while also supporting the battery cell assembly 1110.

In some embodiments, referring to FIG. 3, the box body assembly 1120 includes a box body 1121 being provided with an opening, and the refrigerant heat-exchange component 1130 is connected to the box body 1121 and covers the opening to form the accommodating cavity 1124; and the refrigerant heat-exchange component 1130 is disposed opposite to the battery cell assembly 1110.

Specifically, the box body 1121 may include a cover body 1122 and a box frame 1123. The cover body 1122 and the box frame 1123 cover each other, and an opening is formed in the side of the box frame 1123 opposite to the cover body 1122. It can be understood that the cover body 1122 and the box frame 1123 are connected to form a groove structure with an opening. The cover body 1122, the box frame 1123, and the refrigerant heat-exchange component 1130 together define the accommodating cavity 1124 for accommodating the battery cell assembly 1110. The cover body 1122 can be a plate-shaped structure, and the box frame 1123 can be a hollow structure with both ends open. For example, the box frame 1123 is an annular frame structure. The cover body 1122 covers one open side of the box frame 1123, and the refrigerant heat-exchange component 1130 is connected to the other open (i.e., opening) side of the box frame 1123. The cover body 1122 can be disposed opposite to the refrigerant heat-exchange component 1130. The box body 1121 may be in various shapes, such as a cylinder or a cuboid.

The refrigerant heat-exchange component 1130 can be connected to the box body 1121. The refrigerant heat-exchange component 1130 can form the box bottom plate 1125 to be opposite to the battery cell assembly 1110. Thus, while exchanging heat with the battery cell assembly 1110, the refrigerant heat-exchange component can also be configured to support the battery cell assembly 1110, thereby helping to simplify the structure of the outer box body 1121 so as to facilitate reducing the weight of the battery apparatus 1100.

In this embodiment, the refrigerant heat-exchange component 1130 can be connected to the box body 1121. The refrigerant heat-exchange component 1130 can form the box bottom plate. Thus, while exchanging heat with the battery cell assembly 1110, the refrigerant heat-exchange component can also be configured to support the battery cell assembly 1110, thereby helping to simplify the structure of the outer box body 1121 so as to facilitate reducing the weight of the battery apparatus 1100.

In some embodiments, the main heat-exchange flow channel 11331 is filled with a phase change medium.

Specifically, the phase change medium is a substance that can undergo a phase change at a specific temperature and absorb or release a large amount of latent heat during a phase change process. In this example, the phase change medium is used as a heat-exchange medium. When the battery cell assembly 1110 generates a large amount of heat during charging and discharging, the phase change medium in the main heat-exchange flow channel 11331 absorbs the heat and undergoes a phase change, thereby slowing down the rapid rise in the temperature of the battery apparatus 1100. When the temperature of the battery apparatus 1100 decreases, the phase change medium releases heat, thereby mitigating the impact of excessively low battery temperatures on performances. The use of the phase change medium as the heat-exchange medium helps to maintain a relatively stable temperature in the battery apparatus 1100, thereby reducing problems such as capacity fading and shortened service life of the battery apparatus 1100 caused by excessively high temperatures, or the increased internal resistance and reduced charging and discharging efficiency of the battery apparatus 1100 caused by excessively low temperatures, thereby improving the overall performance, reliability, and stability of the battery apparatus 1100.

It should be noted that the phase change medium and the refrigerant can work in coordination. For example, in a large-scale battery energy storage system, the refrigerant is responsible for transferring the heat generated by the battery cell assembly 1110 from a battery module to a heat dissipation end of the entire thermal management system, while the phase change medium is arranged inside the battery module. When the battery cell assembly 1110 generates a large amount of heat in a short period of time, the phase change medium quickly absorbs the heat and undergoes a phase change, thereby alleviating the rapid rise in temperature and buying time for the refrigerant to further dissipate heat. The two work together to improve the efficiency and stability of the thermal management system.

In this embodiment, filling the main heat-exchange flow channel 11331 with the phase change medium helps to improve the heat-exchange efficiency, thereby enhancing the performance stability of the battery apparatus 1100.

In some embodiments, the refrigerant heat-exchange component 1130 is formed from one or more of metals and non-metals.

Specifically, metallic materials, such as copper and aluminum, have good thermal conductivity and can quickly conduct heat, thereby enabling the refrigerant heat-exchange component 1130 to efficiently dissipate the heat generated by the battery cell assembly 1110. Non-metallic materials, such as ceramics, have unique advantages in thermal performance. For example, some ceramic materials have high-temperature resistance and can still maintain stable thermal conductivity even in high-temperature environments. Combining metals and non-metals can fully leverage their respective thermal conductivity advantages, which ensures that the refrigerant heat-exchange component 1130 maintains efficient thermal conductivity under different operating temperature ranges and heat load conditions, thereby improving the overall performance of the battery thermal management system.

In this embodiment, the material selection for the refrigerant heat-exchange component 1130 is more flexible and diverse, and materials can be flexibly combined for manufacturing according to the heat-exchange requirements of the battery apparatus 1100, so that the refrigerant heat-exchange component 1130 can maintain high-efficiency thermal conductivity, thereby improving the overall performance of the battery thermal management system.

In some embodiments, referring to FIG. 4, the battery apparatus 1100 further includes a connector component 1140, the connector component 1140 is connected to the refrigerant heat-exchange component 1130 and correspondingly in communication with the first flow-direction flow channel 11311 and the second flow-direction flow channel 11312 of the inlet and outlet region 1131.

Specifically, the connector component 1140 is provided with a flow channel inlet and a flow channel outlet. The refrigerant flow channel in the inlet and outlet region 1131 includes a plurality of first flow-direction flow channels 11311 and a plurality of second flow-direction flow channels 11312. The flow channel inlet is in communication with each first flow-direction flow channel 11311, and the flow channel outlet is in communication with each second flow-direction flow channel 11312. The connector component 1140 can be connected to the refrigerant heat-exchange component 1130 by welding, or the connector component 1140 can also be connected to the refrigerant heat-exchange component 1130 by fasteners or other components. The connector component 1140 may be located on the upper portion of the first surface 1135 and disposed close to the edge.

In this embodiment, by disposing the connector component 1140, it is easy to connect to an external pipeline configured to deliver the heat-exchange medium (i.e., the refrigerant), thereby improving the convenience of assembly.

According to some embodiments of the present application, referring to FIG. 4, the present application further provides a refrigerant heat-exchange apparatus. The refrigerant heat-exchange apparatus includes the refrigerant heat-exchange component 1130 in the battery apparatus 1100 in any one of the above embodiments.

The example of the refrigerant heat-exchange apparatus in the present application is based on the example of the above battery apparatus 1100. The structure of the refrigerant heat-exchange component 1130 in the example of the above battery apparatus 1100 is the same as that of the refrigerant heat-exchange component 1130 in this example, and the technical effects are the same, and will not be repeated here. For details, please refer to the above description about the battery apparatus 1100.

According to some embodiments of the present application, the present application further provides an energy storage apparatus. The energy storage apparatus includes a power conversion apparatus and the energy storage apparatus in the above embodiment, and the power conversion apparatus is configured to electrically connect a power generation apparatus and the energy storage apparatus.

Specifically, the energy storage apparatus may include one or more battery clusters to increase the voltage and capacity of the energy storage apparatus. The energy storage apparatus may include a plurality of battery apparatuses 1100, and the plurality of battery apparatuses 1100 are connected in series via busbar components to increase the voltage of the energy storage apparatus. When the energy storage apparatus includes the plurality of battery clusters, the plurality of battery clusters are connected in parallel to increase the capacity of the energy storage apparatus.

The energy storage apparatus can be used for an energy storage power station, a wind power generation system, a solar power generation system, a mobile power system or a temporary power supply system and the like. Energy storage apparatuses can store electric energy as needed and output it at the appropriate time. For example, energy storage apparatuses can store electric energy during low electricity consumption periods and provide electric energy to relevant users for relevant users or electrical devices during peak electricity consumption periods. An energy storage system provided by the embodiments of the present application may be any power system that requires the energy storage apparatus.

In some embodiments, the energy storage apparatus is an energy storage container or an energy storage cabinet.

In some embodiments, the energy storage apparatus may include a cabinet body and one or more battery clusters, where the battery clusters are accommodated in the cabinet body.

In some embodiments, the energy storage apparatus may include modules such as a thermal management module, a master control module, a general control module, a power distribution module, and a fire protection module.

As an example, the thermal management module may include a liquid cooling unit that provides a cooling liquid for regulating the temperature of the battery cell to each battery apparatus 1100 through a pipeline.

As an example, the master control module can be used as a battery management unit of the battery cluster to monitor and manage the battery cluster. The master control module can monitor information such as the current, voltage, power, or temperature of the battery cluster. For example, the charging and discharging current and voltage of the battery cluster can be controlled. The master control module includes a slave battery management unit (SBMU), a fusion switch, and other modules.

As an example, the general control module can be used as a battery management unit of the energy storage apparatus to monitor and manage the energy storage apparatus. The general control module can monitor the current, voltage, power, state of charge or temperature or other information of the energy storage apparatus. For example, the charging and discharging current and voltage of the energy storage apparatus can be controlled. As an example, the general control module includes an insulation monitoring module (IMM), a master battery management unit (MBMU), Ethernet (ETH), an optic fiber conversion module, or other modules.

As an example, the fire protection module includes a control panel, a detector, an alarm apparatus, etc., which are configured to conduct detection, give an alarm, or extinguish fire in the energy storage system.

As an example, the power distribution module can be configured to distribute power to power consumption modules in the energy storage apparatus.

According to some embodiments of the present application, the present application further provides an energy storage system, the energy storage system includes a power conversion apparatus and the energy storage apparatus in the above embodiment, and the power conversion apparatus is configured to electrically connect a power generation apparatus with the energy storage apparatus.

In some embodiments, the energy storage system may include one or more energy storage apparatuses and a power converter system (PCS for short), where the power converter system is configured to connect between a power generation device and the energy storage apparatus. The power generation device is configured to generate the electric energy, and the electric energy generated in the power generation device can be stored in the energy storage apparatus through the power converter system. As an example, the power generation device can be particularly a solar panel, a hydroelectric power generation device, a thermal power generation device, and the like. The present application does not restrict the specific type of the power generation device.

According to some embodiments of the present application, referring to FIG. 1, the present application further provides an electrical apparatus. The electrical apparatus includes the battery apparatus 1100 in the above embodiments, the energy storage apparatus in the above embodiments, or the energy storage system in the above embodiments. The battery apparatus 1100 is configured to store or provide electric energy.

The technical solutions described in the embodiments of the present application are all applicable to various electrical apparatuses using battery cells, such as mobile phones, portable devices, laptops, storage battery cars, electric toys, electric tools, vehicles 1000, ships, spacecrafts, and the like. For example, the spacecrafts include airplanes, rockets, space shuttles, spaceships, and the like.

The examples of electrical apparatuses in the present application are based on the examples of the above battery apparatus 1100. The examples of the electrical apparatuses achieve all the technical effects of the examples of the above battery apparatus 1100, which will not be repeated here.

According to some embodiments of the present application, the present application further provides a charging network. The charging network includes a charging pile and the energy storage apparatus in the above embodiments or the energy storage system in the above embodiments, and the energy storage apparatus is configured to provide electric energy for the charging pile.

For example, the charging network includes the charging pile and the energy storage apparatus, the charging pile is electrically connected to the energy storage apparatus, and the energy storage apparatus is configured to provide electric energy for the charging pile. The charging pile and the battery apparatus 1100 in the energy storage apparatus are electrically connected by a cable, and the battery apparatus 1100 can provide the electric energy stored therein to the charging pile. The charging pile is provided with one or more connectors, and the connector is configured to be connected to the electrical apparatus (such as the vehicle 1000), so that energy can be supplemented to the electrical apparatus.

The energy storage apparatus can be located inside the charging pile (such as a storage and charging all-in-one machine) or outside the charging pile.

The above are merely preferred embodiments of the present application, and only specifically describe the technical principles of the present application. These descriptions are only for explaining the principles of the present application and should not be interpreted as limiting the scope of protection of the present application in any way. Based on the explanation, any modification, equivalent replacement, and improvement made within the spirit and principle of the present application and other embodiments of the present application that can occur to those skilled in the art without creative efforts shall fall within the protection scope of the present application.

## Claims

1. A battery apparatus (1100), comprising:
a box body assembly (1120), being provided with an accommodating cavity (1124);
a battery cell assembly (1110), disposed in the accommodating cavity (1124), wherein the battery cell assembly (1110) comprises a plurality of battery cell groups (1111), each battery cell group (1111) comprises a plurality of battery cells (1112) stacked in a first direction (X), and the plurality of battery cell groups (1111) are disposed side by side in a second direction (Y); and
a refrigerant heat-exchange component (1130), being provided with a heat-exchange surface (1134), the heat-exchange surface (1134) being configured to exchange heat with the battery cell assembly (1110), wherein the refrigerant heat-exchange component (1130) comprises a plurality of main heat-exchange flow channels (11331), and the plurality of main heat-exchange flow channels (11331) are arranged and connected in parallel in the second direction (Y); each main heat-exchange flow channel (11331) comprises a main flow diversion node portion (11332), a main flow confluence node portion (11334), and a main region flow channel portion (11333), with the main region flow channel portion (11333) connected between the main flow diversion node portion (11332) and the main flow confluence node portion (11334); each main region flow channel portion (11333) comprises a plurality of heat-exchange sub-flow channels (11335) connected in parallel; a projection region of each battery cell group (1111) on the heat-exchange surface (1134) covers at least one main heat-exchange flow channel (11331); and the second direction (Y) is perpendicular to the first direction (X).

2. The battery apparatus (1100) according to claim 1, wherein all the heat-exchange sub-flow channels (11335) extend in the first direction (X) and are disposed spaced apart from each other in the second direction (Y).

3. The battery apparatus (1100) according to claim 1, wherein in the first direction (X), both the main flow diversion node portion (11332) and the main flow confluence node portion (11334) are located at the same end of the main region flow channel portion (11333).

4. The battery apparatus (1100) according to any one of claims 1-3, wherein the refrigerant heat-exchange component (1130) comprises a main flow diversion and flow confluence region (1132) and a heat-exchange region (1133), the main heat-exchange flow channels (11331) are distributed in the heat-exchange region (1133), the main flow diversion and flow confluence region (1132) comprises a plurality of main flow channels (11321), a part of the main flow channels (11321) are respectively in communication with the main flow diversion node portions (11332), the other part of the main flow channels (11321) are respectively in communication with the main flow confluence node portions (11334), and the number of the main flow channels (11321) is less than or equal to the total number of the main flow diversion node portions (11332) and the main flow confluence node portions (11334).

5. The battery apparatus (1100) according to claim 4, wherein the plurality of main flow channels (11321) are divided into a plurality of first main flow channels (11322) and a plurality of second main flow channels (11323), each main region flow channel portion (11333) comprises an upstream flow channel (11336) and a downstream flow channel (11337), the first main flow channel (11322), the main flow diversion node portion (11332), the upstream flow channel (11336), the downstream flow channel (11337), the main flow confluence node portion (11334), and the second main flow channel (11323) are disposed in communication with each other in sequence, and the number of the first main flow channels (11322) is less than or equal to the total number of the main flow diversion node portions (11332).

6. The battery apparatus (1100) according to claim 4, wherein the plurality of main flow channels (11321) are divided into a plurality of first main flow channels (11322) and a plurality of second main flow channels (11323), each main region flow channel portion (11333) comprises an upstream flow channel (11336) and a downstream flow channel (11337), the first main flow channel (11322), the main flow diversion node portion (11332), the upstream flow channel (11336), the downstream flow channel (11337), the main flow confluence node portion (11334), and the second main flow channel (11323) are disposed in communication with each other in sequence, and the number of the second main flow channels (11323) is less than or equal to the total number of the main flow confluence node portions (11334).

7. The battery apparatus (1100) according to any one of claims 1-3, wherein each main region flow channel portion (11333) comprises an upstream flow channel (11336) and a downstream flow channel (11337), the upstream flow channel (11336) comprises a plurality of upstream sub-flow channels (11338) that are all in communication with the downstream flow channel (11337), the plurality of upstream sub-flow channels (11338) extend in the first direction (X) and are arranged opposite to and spaced apart from each other in the second direction (Y), and each upstream sub-flow channel (11338) is in communication with the main flow diversion node portion (11332); and the downstream flow channel (11337) is connected to the main flow confluence node portion (11334).

8. The battery apparatus (1100) according to any one of claims 1-3, wherein each main region flow channel portion (11333) comprises an upstream flow channel (11336) and a downstream flow channel (11337), the downstream flow channel (11337) comprises a plurality of downstream sub-flow channels (11339) that are all in communication with the upstream flow channel (11336), the plurality of downstream sub-flow channels (11339) extend in the first direction (X) and are arranged opposite to and spaced apart from each other in the second direction (Y), and each downstream sub-flow channel (11339) is in communication with the main flow confluence node portion (11334); and the upstream flow channel (11336) is connected to the main flow diversion node portion (11332).

9. The battery apparatus (1100) according to any one of claims 1-3, wherein each main region flow channel portion (11333) comprises an upstream flow channel (11336) and a downstream flow channel (11337), the upstream flow channel (11336) in a part of the main region flow channel portion (11333) is disposed adjacent to the upstream flow channel (11336) in an adjacent main region flow channel portion (11333), and the downstream flow channel (11337) in a part of the main region flow channel portion (11333) is disposed adjacent to the downstream flow channel (11337) in an adjacent main region flow channel portion (11333).

10. The battery apparatus (1100) according to claim 4, wherein the refrigerant heat-exchange component (1130) further comprises an inlet and outlet region (1131), the inlet and outlet region (1131) comprises a first flow-direction flow channel (11311) and a second flow-direction flow channel (11312), and a flow direction of a refrigerant in the first flow-direction flow channel (11311) is opposite to a flow direction of the refrigerant in the second flow-direction flow channel (11312); the plurality of main heat-exchange flow channels (11331) are symmetrically arranged on both sides of an axis of symmetry parallel to the first direction (X), and the inlet and outlet region (1131) is arranged at one end of the axis of symmetry; and both the first flow-direction flow channel (11311) and the second flow-direction flow channel (11312) are in communication with the main flow channel (11321).

11. The battery apparatus (1100) according to any one of claims 1-3, wherein the number of the battery cell groups (1111) is equal to the number of the main heat-exchange flow channels (11331).

12. The battery apparatus (1100) according to any one of claims 1-3, wherein the battery cell group (1111) has a first length (L1) in the first direction (X), each main heat-exchange flow channel (11331) correspondingly forms the heat-exchange surface (1134) on a surface of the refrigerant heat-exchange component (1130), the heat-exchange surface (1134) has a second length (L2) in the first direction (X), and a ratio of the first length (L1) to the second length (L2) is in a range of 0.8 to 1.2.

13. The battery apparatus (1100) according to any one of claims 1-3, wherein the refrigerant heat-exchange component (1130) is provided with the heat-exchange surface (1134) opposite to the battery cell assembly (1110), each main heat-exchange flow channel (11331) is configured to be opposite to the heat-exchange surface (1134), and a ratio of an area of a projection region of each main heat-exchange flow channel (11331) on the heat-exchange surface (1134) to an area of the heat-exchange surface (1134) is greater than or equal to 0.4 and less than or equal to 0.8.

14. The battery apparatus (1100) according to any one of claims 1-3, wherein the refrigerant heat-exchange component (1130) is provided with a first surface (1135) and a second surface opposite to each other, the first surface (1135) being disposed opposite to the battery cell assembly (1110); and the refrigerant heat-exchange component (1130) comprises a plurality of mounting holes (1139), the plurality of mounting holes (1139) being configured in a penetrating mode between the first surface (1135) and the second surface and being disposed avoiding the main heat-exchange flow channel (11331).

15. The battery apparatus (1100) according to claim 14, wherein in the first direction (X), the plurality of mounting holes (1139) are arranged in a middle region of the refrigerant heat-exchange component (1130) and disposed spaced apart from each other in the second direction (Y); and/or, in the second direction (Y), the plurality of mounting holes (1139) are arranged in the middle region of the refrigerant heat-exchange component (1130) and disposed spaced apart from each other in the first direction (X).

16. The battery apparatus (1100) according to claim 15, wherein the spacing between every two adjacent mounting holes (1139) is in a range of 300 mm to 1000 mm; and/or
an outer diameter of the mounting hole (1139) is 30 mm to 60 mm.

17. The battery apparatus (1100) according to any one of claims 1-3, wherein a plurality of cavities (1138) are also formed in the refrigerant heat-exchange component (1130), and each cavity (1138) is configured to avoid the main heat-exchange flow channel (11331).

18. A refrigerant heat-exchange apparatus, wherein the refrigerant heat-exchange apparatus comprises the refrigerant heat-exchange component (1130) in the battery apparatus (1100) according to any one of claims 1-17.

19. An electrical apparatus, comprising the battery apparatus according to any of claims 1-17, wherein the battery apparatus is configured to store or provide electric energy.
